(19) Europäisches Patentamt

European Patent Office

Office européen des brevets

(11) **EP 4 443 215 B1**

(12) **FASCICULE DE BREVET EUROPEEN**

(45) Date de publication et mention de la délivrance du brevet:
**08.10.2025 Bulletin 2025/41**

(21) Numéro de dépôt: **24168576.7**

(22) Date de dépôt: **04.04.2024**

(51) Classification Internationale des Brevets (IPC):
**G02B 27/01** (2006.01)    **G02B 5/18** (2006.01)
**G02B 27/42** (2006.01)

(52) Classification Coopérative des Brevets (CPC):
**G02B 27/0172; G02B 5/1819; G02B 27/4205;**
G02B 2027/0147; G02B 2027/0174

(54) **DISPOSITIF DE PROJECTION À RÉPARTITION DE POINT D'ÉMISSION OPTIMISÉE À PARTIR DE CONFIGURATION D'ISOLIGNES**

PROJEKTIONSVORRICHTUNG MIT OPTIMIERTER SENDEPUNKTVERTEILUNG AUS ISOLINIENKONFIGURATION

PROJECTION DEVICE WITH OPTIMIZED EMISSION POINT DISTRIBUTION FROM ISOLINE CONFIGURATION

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorité: **07.04.2023 FR 2303529**

(43) Date de publication de la demande:
**09.10.2024 Bulletin 2024/41**

(73) Titulaires:
- **Commissariat à l'Energie Atomique et aux Energies Alternatives**
  **75015 Paris (FR)**
- **Université Grenoble Alpes**
  **38400 Saint-Martin-d'Hères (FR)**
- **Institut Polytechnique de Grenoble**
  **38000 Grenoble (FR)**
- **Centre National de la Recherche Scientifique**
  **75016 Paris (FR)**

(72) Inventeurs:
- **MARTINEZ, Christophe**
  **38054 GRENOBLE CEDEX 09 (FR)**
- **RAINOUARD, Fabian**
  **38054 GRENOBLE CEDEX 09 (FR)**

- **OUDET, Edouard**
  **73110 ARVILLARD (FR)**

(74) Mandataire: **Atout PI Laplace**
**Immeuble Up On**
**25 Boulevard Romain Rolland**
**CS 40072**
**75685 Paris Cedex 14 (FR)**

(56) Documents cités:
**FR-A1- 3 122 929**

- **RAINOUARD FABIAN ET AL: "Optimal dense and random addressing design of emissive points in a retinal projection device", PROCEEDINGS OF THE SPIE, SPIE, US, vol. 12138, 17 May 2022 (2022-05-17), pages 121380R - 121380R, XP060158344, ISSN: 0277-786X, ISBN: 978-1-5106-5738-0, DOI: 10.1117/12.2620243**
- **RAINOUARD FABIAN ET AL: "Improved mathematical model for a dense network of waveguide and electrode design", PROCEEDINGS OF THE SPIE, SPIE, US, vol. 11689, 5 March 2021 (2021-03-05), pages 116891N - 116891N, XP060140272, ISSN: 0277-786X, ISBN: 978-1-5106-5738-0, DOI: 10.1117/12.2578309**

## Description

### Domaine technique

La présente invention concerne de manière générale la projection d'une image sur un œil, dans des applications de type réalité augmentée, et en particulier un dispositif de projection à répartition de points d'émission optimisée sur une surface d'émission discrétisée et à partir de configuration d'isolignes, ainsi qu'un procédé pour la fabrication d'un tel dispositif.

Un système optique portable d'affichage de données en réalité augmentée superpose, à la vision du monde réel d'un utilisateur du système, une image contenant des informations destinées à l'utilisateur, telles que par exemple des informations sur son environnement, sa position, sa vitesse de déplacement, etc.

Certains systèmes optiques portables d'affichage de données en réalité augmentée connus utilisent un dispositif de projection d'image comportant un circuit optique intégré transparent composé d'un réseau de guides de lumière nanométriques, d'un réseau d'électrodes et d'un film holographique, comme décrit par exemple dans les demandes de brevet FR3122929A1 et FR3022642A1. Un tel dispositif de projection d'image est implémenté sans écran ni système optique, ce qui permet d'obtenir un système optique compact, et un champ de vision étendu pour l'utilisateur. Les intersections du circuit de guides de lumière nanométriques avec le réseau d'électrodes permettent de définir un ensemble de points d'émission susceptibles d'émettre une onde lumineuse dirigée vers la pupille de l'œil de l'utilisateur. L'ensemble de points d'émission est subdivisé en différents sous-ensembles, chaque sous-ensemble comportant des points d'émission répartis, le plus aléatoirement possible. Les ondes lumineuses associées à un même sous-ensemble de points d'émission se propagent selon une même direction pour former un point lumineux unique au niveau de la rétine de l'œil de l'utilisateur. Un point lumineux correspond à un pixel d'une image à projeter.

Cependant, un tel dispositif présente l'inconvénient d'utiliser des répartitions de points d'émission définis selon certaines périodicités spatiales générant des effets de diffraction lors de la formation de l'image sur la rétine. Par ailleurs, il présente également une densité limitée des points d'émission de chaque sous-ensemble subdivisé pour former chaque point lumineux. Il en résulte un halo lumineux associé à la projection rétinienne qui dégrade le contraste de l'image à afficher. Par suite, la qualité de projection d'images sur la rétine d'un utilisateur est insuffisante.

Il existe ainsi un besoin pour un dispositif de projection d'image amélioré permettant d'augmenter la densité de points d'émission d'un sous-ensemble subdivisé tout en améliorant la répartition pseudo-aléatoire et apériodique des points d'émission.

### Résumé de l'invention

La présente invention vient améliorer la situation en proposant un procédé pour la fabrication d'un dispositif de projection d'image sur un œil. Le dispositif est défini dans un repère orthogonal $(X,Y,Z)$ et comprend une surface d'émission S s'étendant généralement dans le plan $(X,Y)$ du repère orthogonal $(X,Y,Z)$. La surface d'émission S comprend un empilement d'éléments, les éléments comprenant un ensemble de $M_x$ guides d'ondes $g_p$, un ensemble de $M_x \times M_y$ réseaux de diffraction $r_{pq}$ et un ensemble de $M_y$ électrodes $e_q$, $M_x$ et $M_y$ étant des entiers positifs dont le produit $M_x \times M_y$ est strictement supérieur à 1. Chaque réseau de diffraction $r_{qp}$ est positionné à l'intersection d'un des guides d'ondes $g_p$ et d'une des électrodes $e_p$ de manière à former un point d'émission $EP_{pq}$ d'une onde lumineuse. L'ensemble de $M_x$ guides d'ondes $g_p$ est agencé selon une configuration de guides d'ondes, et l'ensemble de $M_y$ électrodes $e_q$ est agencé selon une configuration d'électrodes.

Le procédé comprend une phase de conception du dispositif et une phase de fabrication matérielle du dispositif ainsi conçu. La phase de conception comprend une étape consistant à déterminer la configuration de guides d'ondes ou la configuration d'électrodes, la configuration déterminée étant une configuration d'isolignes non rectilignes définie dans le plan $(X,Y)$ défini par la surface d'émission S et générant une répartition apériodique des $M_x \times M_y$ points d'émission $EP_{pq}$.

Dans des modes de réalisation, l'étape de détermination de configuration peut consister à déterminer la configuration de guides d'ondes et la configuration d'électrodes, les configurations déterminées étant une configuration d'isolignes non rectilignes définies dans le plan $(X,Y)$ défini par la surface d'émission S et générant une répartition apériodique des $M_x \times M_y$ points d'émission $EP_{pq}$.

Avantageusement, la phase de conception peut comprendre l'étape consistant à déterminer une courbe géométrique initiale s'étendant de part et d'autre de la surface d'émission S selon un axe d'extension parallèle à l'axe X et/ou à l'axe Y du repère orthogonal $(X,Y,Z)$. La courbe géométrique initiale peut être définie aléatoirement en respectant au moins une caractéristique de construction de courbe.

La courbe géométrique initiale peut être constituée d'une succession de segments.

Selon certains modes de réalisation, la phase de conception peut comprendre l'étape consistant à appliquer une fonction de distance à la courbe géométrique initiale pour générer la configuration de guides d'ondes isolignes et/ou la configuration d'électrodes isolignes.

La fonction de distance peut être déterminée par une méthode de type *Fast-Marching.*

Avantageusement, la courbe géométrique initiale peut comprendre uniquement des points ordinaires dits 'points réguliers' pour lesquels les dérivées partielles de la courbe selon X et Y ne sont pas simultanément nulles.

La courbe géométrique initiale peut comprendre en tout point de la courbe, dans le plan (X,Y), un rayon de courbure supérieur ou égale à un rayon de courbure minimum prédéfini.

Le rayon de courbure minimum peut être défini en fonction des propriétés physiques des guides d'ondes $g_p$ et/ou des électrodes $e_q$, et/ou des contraintes de fabrication des guides d'ondes ou des électrodes.

Dans des modes de réalisation, la phase de conception peut comprendre l'étape consistant à discrétiser la surface d'émission S en $L_x \times L_y$ de zones d'émission élémentaires $\mathcal{Z}^{ij}$ selon un maillage continu dans le plan (X,Y), chaque zone d'émission élémentaire $\mathcal{Z}^{ij}$ comprenant un sous-ensemble de $m_x^{ij} \times m_y^{ij}$ de points d'émission $EP_{pq}^{ij}$. L'étape consistant à déterminer la configuration de guides d'ondes et/ou la configuration d'électrodes peut être appliquée à chaque zone d'émission élémentaire $\mathcal{Z}^{ij}$ de sorte à former une sous-configuration de guides d'ondes isolignes non rectilignes et/ou une sous-configuration d'électrodes isolignes non rectilignes.

La sous-configuration de guides d'ondes isolignes non rectilignes et/ou lasous-configuration d'électrodes isolignes non rectilignes peuvent être générées en appliquant une méthode de type *Fast-Marching à* une courbe géométrique initiale s'étendant dans le plan de la surface d'émission S de part et d'autre de la zone d'émission élémentaire $\mathcal{Z}^{ij}$ selon un axe d'extension parallèle à l'axe X et/ou à l'axe Y.

Un autre objet de l'invention est un dispositif de projection d'une image sur un œil. Le dispositif est fabriqué à partir du procédé pour la fabrication. Le dispositif est défini dans un repère orthogonal (X,Y,Z) et comprend une surface d'émission S s'étendant généralement dans le plan (X,Y) du repère orthogonal (X,Y,Z). La surface d'émission S comprend un empilement d'éléments, les éléments comprenant un ensemble de $M_x$ guides d'ondes $g_p$, un ensemble de $M_x \times M_y$ réseaux de diffraction $r_{pq}$ et un ensemble de $M_y$ électrodes $e_q$, les nombres $M_x$ et $M_y$ étant des entiers strictement supérieurs à 1. Chaque réseau de diffraction $r_{qp}$ est positionné à l'intersection d'un des guides d'ondes $g_p$ et d'une des électrodes $e_p$ de manière à former un point d'émission $EP_{pq}$ d'une onde lumineuse. L'ensemble de $M_x$ guides d'ondes $g_p$ est agencé selon une configuration de guides d'ondes, et l'ensemble de $M_y$ électrodes $e_q$ est agencé selon une configuration d'électrodes. La configuration de guides d'ondes ou la configuration d'électrodes est des configurations d'isolignes non rectilignes définies dans le plan (X,Y) défini par la surface d'émission S et générant une répartition apériodique des ($M_x \times M_y$) points d'émission $EP_{pq}$.

L'invention fournit également un système optique portable d'affichage de données transparent comprenant un dispositif de projection d'une image. Le système est un système de lunettes ou un casque à réalité augmentée.

Le dispositif de projection d'image selon les modes de réalisation de l'invention permet d'améliorer la qualité, en particulier le contraste, de projection des images sur la rétine d'un utilisateur, à partir d'une répartition apériodique de points d'émission optimisée sur une surface d'émission discrétisée, d'une augmentation de la densification des points d'émission sur une surface d'émission et de configurations d'isolignes.

Un tel dispositif permet en outre de faciliter et d'accélérer le procédé pour la fabrication du dispositif.

## Description des figures

D'autres caractéristiques, détails et avantages de l'invention ressortiront à la lecture de la description faite en référence aux dessins annexés donnés à titre d'exemple.

[Fig.1a] La figure 1a est un schéma représentant un dispositif de projection d'image, selon des modes de réalisation de l'invention.

[Fig.1b] La figure 1b est un schéma représentant un exemple d'image à projeter sur un œil d'un utilisateur d'un système optique portable d'affichage de données, selon des modes de réalisation de l'invention.

[Fig.2] La figure 2 est un schéma représentant une coupe transversale de la structure de la surface d'émission d'un dispositif de projection d'image selon le plan (X,Z), selon des modes de réalisation de l'invention.

[Fig.3] La figure 3 est un schéma représentant une discrétisation de la surface d'émission d'un dispositif de projection d'image dans le plan (X,Y), selon des modes de réalisation de l'invention.

[Fig.4] La figure 4 est un schéma représentant une zone d'émission élémentaire de la surface d'émission discrétisée d'un dispositif de projection d'image dans le plan (X,Y), selon des modes de réalisation de l'invention.

[Fig.5] La figure 5 est un schéma représentant une projection dans le plan (X,Y) du domaine angulaire de projection associé à une zone d'émission élémentaire de la surface d'émission discrétisée d'un dispositif de projection d'image, selon des modes de réalisation de l'invention.

[Fig.6] La figure 6 est un schéma représentant un ensemble de zones d'éclairement sur une pupille associé aux zones d'émission élémentaires de la surface d'émission discrétisée d'un dispositif de projection d'image, selon des modes de réalisation de l'invention.

[Fig.7a] et [Fig.7b] Les figures 7a et 7b sont des schémas représentant des surfaces d'émission reproduites dans le plan (X,Y) sur un dispositif de projection d'image, selon des modes de réalisation de l'invention.

[Fig.8a] La figure 8a est un graphique représentant une distribution spatiale de l'intensité la réponse percussionnelle formée par une distribution de points d'émission d'un dispositif de projection d'image, selon des modes de réalisation de l'invention.

[Fig.8b] La figure 8b est un graphique représentant une évolution d'un ratio de puissance d'une distribution spatiale de l'intensité la réponse percussionnelle en fonction d'une densité des points d'émission d'un dispositif de projection d'image, selon des modes de réalisation de l'invention.

[Fig.9] La figure 9 illustre les résultats de simulations d'une image projetée pour différentes dimensions comparatives d'un dispositif de projection d'image, selon des modes de réalisation de l'invention.

[Fig.10] La figure 10 est un organigramme représentant des étapes d'un procédé pour la fabrication du dispositif de projection d'une image, selon des modes de réalisation de l'invention.

[Fig.11a] et [Fig.11b] Les figures 11a et 11b sont des organigrammes représentant des sous-étapes d'un procédé pour la fabrication du dispositif de projection d'une image, selon des modes de réalisation de l'invention.

[Fig.12] Les figures 12a et 12b sont schéma représentant un système optique d'enregistrement des hologrammes, selon des modes de réalisation de l'invention.

[Fig.13] La figure 13 est schéma représentant les configurations de guides d'ondes et d'électrodes isolignes d'une surface d'émission d'un dispositif de projection d'image, selon des modes de réalisation de l'invention.

[Fig.14] La figure 14 est un organigramme représentant des étapes d'un procédé pour la fabrication du dispositif de projection d'une image, selon des modes de réalisation de l'invention.

[Fig.15] La figure 15 est un organigramme représentant des graphiques associés à des étapes d'un procédé pour la fabrication du dispositif de projection d'une image, selon des modes de réalisation de l'invention.

[Fig.16a] et [Fig.16b] Les figures 16a et 16b représentent des résultats de simulation de la distribution spatiale de l'intensité de la réponse percussionnelle pour des configurations par « translations de segments » et des configurations d'isolignes de surface d'émission d'un dispositif de projection d'image, selon des modes de réalisation de l'invention.

[Fig.17a] et [Fig.17b] Les figures 17a et 17b représentent des résultats d'application de critères de quantification de qualité de projection d'une image pour des configurations par « translations de segments » et des configurations d'isolignes de surface d'émission d'un dispositif de projection d'image, selon des modes de réalisation de l'invention.

[Fig.18] La figure 18 est schéma représentant les configurations de guides d'ondes et d'électrodes isolignes associées à une discrétisation de la surface d'émission d'un dispositif de projection d'image dans le plan (X,Y), selon des modes de réalisation de l'invention.

Des références identiques sont utilisées dans les figures pour désigner des éléments identiques ou analogues. Pour des raisons de clarté, les éléments représentés ne sont pas à l'échelle. Par ailleurs, dans la suite de la description, sauf indication contraire, les termes "sensiblement" et "généralement" signifient "à plus ou moins 10% près".

**Description détaillée**

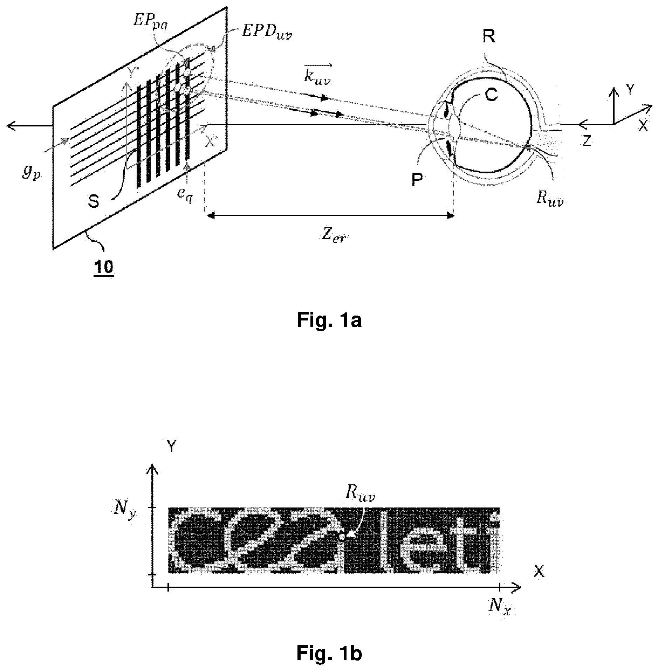

La figure 1a représente schématiquement un dispositif de projection d'image 10 défini dans un repère orthogonal (X,Y,Z) et comprenant un ensemble de guides d'ondes $g_p$ comprenant un nombre $M_x$ de guides d'ondes et un ensemble d'électrodes $e_q$ comprenant $M_y$ électrodes, chaque guides d'ondes $g_p$ étant non parallèle à chacune des électrodes $e_q$, selon des modes de réalisation de l'invention.

Les nombres $M_x$ et $M_y$ sont des entiers positifs dont le produit ($M_x \times M_y$) est strictement supérieur à 1. Le paramètre $p$ désigne un indice associé aux différentes guides d'ondes $g_p$, avec $p \in [1, M_x]$, et le paramètre $q$ désigne un indice associé aux différentes électrodes $e_q$, avec $q \in [1, M_y]$.

Le dispositif de projection d'image 10 peut être utilisé par exemple dans un système optique portable d'affichage de données, dans le domaine de l'affichage d'images en réalité augmentée (RA) et plus généralement dans le domaine de la réalité virtuelle (RV) et la réalité mixte (RM). La figure 1a correspond à une telle application. Comme représenté sur la figure 1a, le dispositif de projection d'image 10 peut être disposé à une distance $Z_{er}$ de la pupille P d'un œil d'un utilisateur du système optique portable d'affichage de données. L'axe Z correspond alors à l'axe optique du regard de l'utilisateur du système et est associé à la position de l'œil dans le plan (X,Y) du repère orthogonal (X,Y,Z). Par exemple, la distance $Z_{er}$ (encore appelée 'dégagement oculaire' ou '*Eye Relief*' selon l'expression anglo-saxonne correspondante) peut être égale à 20 mm pour un système optique portable d'affichage de données comprenant une paire de lunettes de type lunettes de vue, ou égale à 30 mm pour un système comprenant un casque d'immersion RA ou RV/RM.

Le dispositif de projection d'image 10 comprend une surface d'émission S, s'étendant généralement dans le plan (X,Y) et formée de ($M_x \times M_y$) points d'émission, notés $EP_{pq}$. Chaque point d'émission $EP_{pq}$ correspond à l'intersection d'un guide d'onde $g_p$ et d'une électrode $e_q$. Chaque point d'émission $EP_{pq}$ est adapté pour émettre une onde lumineuse se propageant selon un axe de propagation (ou vecteur d'onde) $\vec{k}$, de la surface d'émission S vers la pupille P qui focalise alors la lumière sur la rétine R de l'œil. La surface d'émission S correspond alors à un écran de projection rétinienne.

Le dispositif de projection d'image 10 est adapté pour projeter une image de taille ($N_x \times N_y$) en nombre de pixels et sensiblement définie dans le plan de projection de la rétine R de l'œil. La figure 1b représente un exemple d'image à projeter sur un œil d'un utilisateur. Chaque pixel projeté correspond alors à un point $R_{uv}$ illuminé sur la rétine R.

Les nombres $N_x$ et $N_y$ sont des entiers positifs dont le produit ($N_x \times N_y$) est strictement supérieur à 1. Le paramètre u désignant un indice associé aux pixels de l'image sur l'axe X, avec $u \in [1, N_x]$, et le paramètre v désignant un indice associé aux pixels de l'image selon l'axe Y, avec $v \in [1, N_y]$. Par exemple et sans limitation, un nombre minimum du produit des entiers ($N_x \times N_y$) peut être égale à 100 pixels d'une image à projeter.

L'ensemble des ($M_x \times M_y$) points d'émission $EP_{pq}$ est alors réparti en ($N_x \times N_y$) sous-ensembles de points d'émission. Ces sous-ensembles de points d'émission sont également appelés 'distributions de points d'émission' et désignés par la notation $EPD_{uv}$. Il est à noter qu'un nombre minimum du produit des entiers ($M_x \times N_y$) peut être défini à partir de la maximisation du nombre de distributions de points d'émission ($N_x \times N_y$) sur la surface d'émission S (i.e. pixels à projeter) et du nombre $n_{em/EPD}$ de points d'émission $EP_{pq}$ par distribution de points d'émission $EPD_{uv}$. Par exemple et sans limitation, le nombre $n_{em/EPD}$ peut être compris entre 50 et 200, et le nombre minimum du produit des entiers ($M_x \times M_y$) peut donc être égale à 5000 points d'émission $EP_{pq}$.

Chaque distribution de points d'émission $EPD_{uv}$ peut être formée de telle sorte que tous les points d'émission $EP_{pq}$ d'une même distribution émettent tous une onde lumineuse accordée en phase selon un même axe de propagation $\vec{k}_{uv}$. Il est à noter qu'une première onde lumineuse et une deuxième onde lumineuse ayant chacune un même axe de propagation $\vec{k}_{uv}$ sont accordées en phase si dans un plan perpendiculaire à $\vec{k}_{uv}$, la valeur de la phase de la seconde onde lumineuse est sensiblement égale à la valeur de la phase de la première onde lumineuse modulo $2\pi$. Les ondes lumineuses émises par les points d'émission $EP_{pq}$ d'une même distribution peuvent se propager donc de façon parallèle entre le dispositif de projection d'image 10 et la pupille P de l'œil sur la distance $Z_{er}$, et converger sensiblement jusqu'au même point $R_{uv}$ sur la rétine grâce au cristallin C de l'œil comme représenté sur la figure 1a. Dans ce cas, l'œil perçoit l'image projetée en accommodant à l'infini. Suivant une variante non représentée sur les figures, les ondes lumineuses accordées en phase et émises par les points d'émission $EP_{pq}$ d'une même distribution $EPD_{uv}$ peuvent se propager suivant des directions $\vec{k'}_{uv}$ sensiblement divergentes autour d'une direction $\vec{k}_{uv}$ qui cible le point $R_{uv}$ (i.e. pixel d'indices (u, v)) dans le champ visuel. Dans ce cas, l'œil perçoit l'image projetée en accommodant à une distance, dite distance d'accommodation et notée $d_a$, qui peut être de quelques mètres (i.e. $d_a$ est non égale à l'infini). Par exemple et sans limitation, la distance d'accommodation $d_a$ peut être de 2 m. Le degré de divergence d'une direction $\vec{k}$ d'un et/ou de plusieurs points d'émission $EP_{pq}$ par rapport à la direction $\vec{k}_{uv}$ peut alors être déterminé à partir de la distance d'accommodation $d_a$. L'intensité lumineuse au niveau du point $R_{uv}$ résulte de la contribution de chaque onde lumineuse des points d'émission $EP_{pq}$. La distribution de points d'émission $EPD_{uv}$ est ajustée en phase et forme une onde lumineuse résultante. L'onde lumineuse résultante issue de $EPD_{uv}$ peut être associée à une onde plane ou à une onde sensiblement sphérique si la distance d'accommodation $d_a$ de l'image projetée sur la rétine n'est pas à l'infini). Avantageusement, la répartition des points d'émission $EP_{pq}$ pour chaque distribution de points d'émission $EPD_{uv}$ peut être déterminée de façon aléatoire ou pseudo-aléatoire.

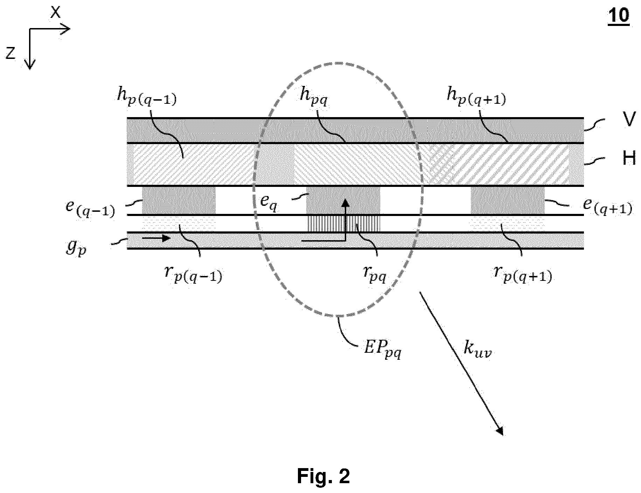

La figure 2 représente schématiquement une coupe transversale de la structure de la surface d'émission S du dispositif de projection d'image 10 selon le plan (X,Z). Cette structure comprend un empilement de plusieurs couches superposées dans la direction de l'axe Z.

Le dispositif 10 comprend une première couche correspondant à l'ensemble des $M_x$ guides d'ondes $g_p$ agencés parallèlement à la surface d'émission S. Chaque guide d'onde $g_p$ s'étend de part et d'autre de la surface d'émission S, à partir d'une position initiale vers une position finale disposées suivant un axe d'extension X' sensiblement parallèle à l'axe longitudinal X. A titre de simplification, sur les figures 1(a) et 2, les guides d'ondes $g_p$ sont représentés schématiquement dans une forme rectiligne selon l'axe X. Néanmoins, l'homme du métier comprendra aisément que l'invention n'est pas limitée à une telle forme de configuration de guides d'onde.

Les guides d'ondes $g_p$ sont configurés pour recevoir une lumière cohérente, émise par une ou plusieurs sources laser (non représentées sur les figures), et pour propager la lumière cohérente le long de la surface d'émission S. Les guides d'ondes $g_p$ peuvent par exemple être formés de nitrure de silicium, et avoir une largeur ($g_y$), dans la direction de l'axe Y sur la figure 1a, et une épaisseur ($g_z$), dans la direction de l'axe Z, toutes deux comprises entre 100 nm et 600 nm.

Le dispositif comprend également une deuxième couche correspondant à l'ensemble des $M_y$ électrodes $e_q$ agencées parallèlement à la surface d'émission S. Chaque électrode $e_q$ s'étend de part et d'autre de la surface d'émission S, à partir d'une position initiale vers une position finale disposées suivant un axe d'extension Y' sensiblement parallèle à l'axe transversal Y. A titre de simplification, sur la figure 1a, les électrodes $e_q$ sont représentés schématiquement sous forme rectiligne dans la direction de l'axe Y. Néanmoins, l'homme du métier comprendra aisément que l'invention n'est pas limitée à une telle forme de configuration d'électrodes.

Les électrodes $e_q$ sont configurées pour recevoir une tension de polarisation (ou modulation électrique) spécifique, gérée par une ou plusieurs alimentations électriques (non représentées sur les figures), et pour propager la modulation électrique le long de la surface d'émission S. Les électrodes $e_q$ sont constituées d'un matériau conducteur, par exemple pour des électrodes transparentes, ce matériau conducteur peut être l'oxyde d'indium étain. Les électrodes $e_q$ peuvent avoir une largeur ($e_x$), dans la direction de l'axe X sur la figure 1a, comprise entre 2 $\mu$m et 10 $\mu$m, et une épaisseur ($e_z$), dans la direction de l'axe Z, dépendant du matériau conducteur. Par exemple, l'épaisseur ($e_z$) d'électrodes $e_q$ constituées d'oxyde d'indium étain peut être comprise typiquement entre 20 nm et 100 nm.

L'ensemble de $M_y$ électrodes $e_q$ est superposé à l'ensemble des $M_x$ guides d'ondes $g_p$, parallèlement à la surface d'émission S. Chaque électrode $e_q$ 'croise' ainsi plusieurs guides d'ondes $g_p$, de façon à définir plusieurs intersections (ou croisements). Chaque intersection correspond à une position d'un point d'émission $EP_{pq}$. Tel qu'utilisé ici, le terme 'intersection' fait référence à une superposition d'un guide d'ondes $g_p$ (i.e. première couche) et d'une électrode $e_q$ (i.e. deuxième couche) non parallèles entre elles.

Le dispositif 10 comprend en outre une troisième couche, comprise entre la première et la deuxième couche, correspondant à un ensemble de ($M_x \times M_y$) réseaux de diffraction, notés $r_{pq}$. Chaque réseau de diffraction $r_{qp}$ est couplé optiquement à un guide d'ondes $g_p$ et est assemblé à une électrode $e_p$. Chaque réseau de diffraction $r_{qp}$ est formé à partir d'une variation périodique d'au moins un matériau à indice de réfraction pouvant être modulé en appliquant une tension de polarisation électrique traversant l'électrode $e_p$.

La troisième couche comprenant l'ensemble de réseaux de diffraction $r_{pq}$ peut être constituée d'une structure continue dans le plan (X,Y) de la surface d'émission S. Alternativement, la troisième couche peut également être constituée de structures localisées dans le plan (X,Y) de la surface d'émission S et positionnées sensiblement au niveau des intersections formées par les guide d'ondes $g_p$ et les électrodes $e_q$. La structure continue ou les structures localisées peuvent être formées par exemple d'inclusions, définissant un motif de variation périodique, dans de l'oxyde de silicium. Les inclusions peuvent alors être constituées de tout matériau ayant un indice de réfraction électriquement modulable, comme par exemple un cristal liquide. Lorsque la longueur d'onde de la lumière émise par une source laser est de 532 nm, la période du motif du réseau de diffraction $r_{pq}$ peut être comprise entre 300 nm et 400 nm. Un réseau de diffraction peut être étalé selon une plage de motifs périodiques sur une longueur ($r_x$) et s'étendre sur une largeur ($r_y$). Ces grandeurs ($r_x$) et ($r_y$) peuvent être définies à partir des zones de superposition formées par les guide d'ondes $g_p$ et les électrodes $e_q$. Par exemple, le réseau de diffraction peut être étalé sur 10 motifs périodiques tels que la longueur ($r_x$) peut être supérieure ou sensiblement égale à la largeur ($e_x$) des électrodes $e_p$ induisant la modulation de l'indice de réfraction. La troisième couche comprenant l'ensemble de réseaux de diffraction peut avoir une épaisseur ($r_z$) comprise par exemple entre 100 nm et 500 nm.

Le dispositif 10 peut comprendre un ensemble d'éléments d'orientations d'onde lumineuse configurés pour contrôler une onde lumineuse. Telle qu'utilisée ici, l'expression « contrôle d'onde lumineuse » (encore appelé 'manipulation d'onde lumineuse') fait référence à divers phénomènes liés aux ondes électromagnétiques qui peuvent se produire lorsqu'un faisceau optique notamment interagit avec la matière d'un objet donné, tel que représenté avec l'élément $h_{pq}$ sur la figure 2. Ces phénomènes comprennent notamment la déviation angulaire, la modification de phase, la transmission, la réflexion, l'absorption, la diffusion, la réfraction et/ou la diffraction de l'onde électromagnétique.

Avantageusement, le dispositif 10 peut comprendre une quatrième couche H, positionnée sur la deuxième couche, comprenant l'ensemble d'éléments d'orientations d'onde lumineuse configurés pour contrôler une onde lumineuse. la quatrième couche H peut être un film holographique comprenant un ensemble de $(M_x \times M_y)$ hologrammes, notés $h_{pq}$. Chaque hologramme $h_{pq}$ correspond à un élément d'orientation (réflectif ou transmissif) et est associé à un réseau de diffraction $r_{pq}$ selon l'axe Z. Le film holographique peut être un photopolymère, par exemple du poly-méthacrylate de méthyle, ou une photorésine, d'épaisseur ($h_z$) comprise entre 2 $\mu$m et 20 $\mu$m. Un hologramme enregistré (ou codé) sur le film holographique peut s'étendre sur une longueur ($h_x$) comprise entre 2 $\mu$m et 20 $\mu$m, et une largeur ($h_y$) comprise entre 1 $\mu$m et 10 $\mu$m. Les grandeurs ($h_x$) et ($h_y$) des hologrammes peuvent être définies à partir des zones de superposition formées par les guide d'ondes $g_p$ et les électrodes $e_q$. Avantageusement, la longueur ($h_x$) peut être supérieure à la largeur ($e_x$) des électrodes $e_p$ induisant des hologrammes jointifs ou se recouvrant deux à deux, tel que représenté sur la figure 2 pour les hologrammes $h_{pq}$ et $h_{p(q-1)}$, permettant par exemple de diminuer la distance minimale entre deux électrodes.

L'empilement des différentes couches et éléments de la structure du dispositif 10 est agencé sur un support V. Le support V peut être un support transparent en verre ou en polycarbonate et compris dans un verre de lunette ou une visière du système optique portable d'affichage de données transparent.

Sur la figure 2, un unique guide d'ondes $g_p$ couplé à trois réseaux de diffraction ponctuels $r_{p(q+1)}$, $r_{pq}$ et $r_{p(q-1)}$, trois électrodes différentes $e_{(q+1)}$, $e_q$ et $e_{(g-1)}$ et trois hologrammes ponctuels $h_{p(q+1)}$, $h_{pq}$ et $h_{p(q-1)}$ sont représentés à titre de simplification et d'exemple non limitatif. L'homme du métier comprendra aisément que l'invention n'est pas limitée à de tels nombres et configurations de guides d'ondes, réseaux de diffraction et électrodes.

Sur la figure 2, le volume d'émission (c'est-à-dire le point d'émission $EP_{pq}$) correspond ainsi à une superposition, parallèlement à la surface d'émission S, du guide d'onde $g_p$ et de l'électrode $e_q$, couplés au réseau de diffraction ponctuel $r_{pq}$ et associés à l'hologramme $h_{pq}$. Pour activer, c'est-à-dire « faire émettre » le point d'émission $EP_{pq}$, le dispositif de projection d'image 10 est configuré pour transmettre une lumière cohérente dans le guide d'onde $g_p$ et pour moduler (ou polariser) électriquement l'électrode $e_q$. Une partie de l'onde lumineuse se propageant dans le guide d'onde $g_p$ est alors extraite au niveau du réseau de diffraction $r_{pq}$ couplé à l'indice de réfraction modifié par l'électrode $e_q$ comme représenté sur la figure 2 par la flèche. La lumière extraite au niveau du réseau de diffraction $r_{pq}$ se propage dans l'hologramme $h_{pq}$ (i.e. un élément d'orientations), de sorte que le dispositif 10 émet en sortie de l'hologramme $h_{pq}$, spatialement au niveau du point d'émission $EP_{pq}$, une onde lumineuse selon un vecteur d'onde $\vec{k}_{uv}$ et un déphasage prédéterminés et stockés (c'est-à-dire préalablement enregistrés ou encodés) dans l'hologramme $h_{pq}$. Les ondes lumineuses émises par différents points d'émission $EP_{pq}$ d'une même distribution $EPD_{uv}$ sont accordées en phase les unes par rapport aux autres selon le même vecteur d'onde $\vec{k}_{uv}$ pour que l'ensemble de ces ondes lumineuses forme une onde résultante dont le front d'onde est maîtrisé, par exemple une onde plane pour une accommodation à l'infini, ou une onde sphérique pour une accommodation à la distance d'accommodation $d_a$. Cette onde résultante se propage vers la pupille P de façon à former un point lumineux unique $R_{uv}$ au niveau de la rétine R. La phase et la direction de l'onde lumineuse émise par un point d'émission $EP_{pq}$ dépendent de l'information de phase enregistrée dans l'hologramme $h_{pq}$.

Chaque distribution $EPD_{uv}$ permet donc la formation d'un point lumineux perçu par l'utilisateur et associé à un pixel d'une image. Une image peut être formée en illuminant successivement différentes distributions de points d'émission $EPD_{uv}$, de façon à former une image comportant un nombre élevé de pixels. La fréquence d'illumination des différentes distributions de points d'émission $EPD_{uv}$ est dimensionnée de manière à ce que l'utilisateur puisse ressentir une formation d'une image fixe sous l'effet de la persistance rétinienne, malgré une formation techniquement séquentielle des différents pixels de l'image.

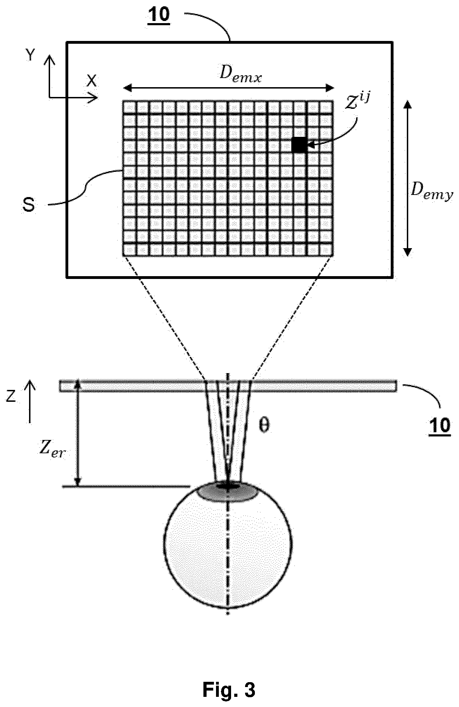

Dans un premier mode de réalisation, la surface d'émission S peut être discrétisée en $(L_x \times L_y)$ zones d'émission élémentaires notées $\mathcal{Z}^{ij}$ formant un maillage continu de la surface d'émission S dans le plan (X,Y), comme représenté sur la figure 3,

Les nombres $L_x$ et $L_y$ sont des entiers positifs dont le produit $(L_x \times L_y)$ est strictement supérieur à 1. Le paramètre i est un indice associé à une discrétisation de la surface d'émission S selon l'axe X, avec $i \in [1, L_x]$, et le paramètre $j$ est un indice associé à une discrétisation de surface d'émission S selon l'axe Y, avec $j \in [1, L_y]$. Par exemple et sans limitation, un nombre minimum de produit des entiers $(L_x \times L_y)$ peut être égale à $(1 \times 2)$ ou $(2 \times 1)$ zones d'émission élémentaires.

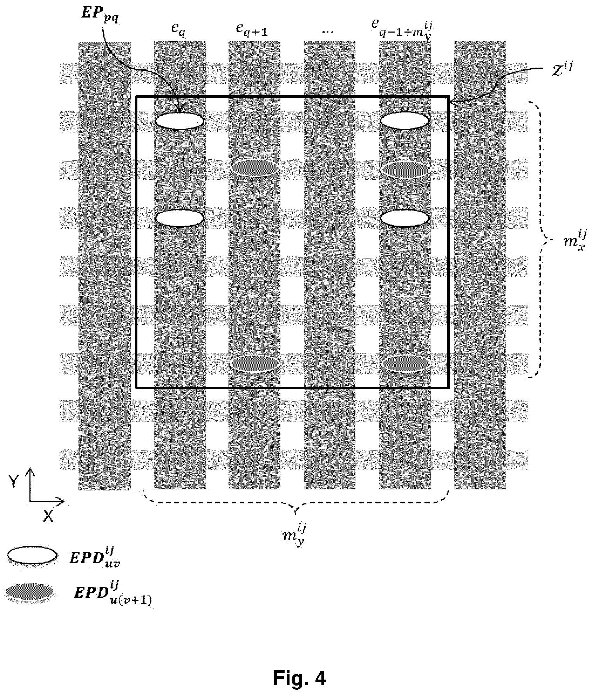

Chaque zone d'émission élémentaire $\mathcal{Z}^{ij}$ peut être associée à un nombre $m_x^{ij}$ de guides d'ondes $g_p^{ij}$, avec $m_x^{ij} \in [1, M_x]$, et à un nombre $m_y^{ij}$ d'électrodes $e_q^{ij}$, avec $m_y^{ij} \in [1, M_y]$, comme illustré sur la figure 4.

Une zone d'émission élémentaire $\mathcal{Z}^{ij}$ comprend donc un sous-ensemble de $\left( m_x^{ij} \times m_y^{ij} \right)$ points d'émission $EP_{pq}^{ij}$ défini parmi les $(M_x \times M_y)$ points d'émission $EP_{pq}$ de la surface d'émission S.

Chaque zone d'émission élémentaire $\mathcal{Z}^{ij}$ peut être associée à un nombre fini de distributions de points d'émission, notés alors $EPD_{uv}^{ij}$. Chaque distribution de points d'émission $EPD_{uv}^{ij}$ d'une zone d'émission élémentaire $\mathcal{Z}^{ij}$ est constituée d'un ou plusieurs points d'émission $EP_{pq}^{ij}$ déterminés uniquement parmi les $\left(m_x^{ij} \times m_y^{ij}\right)$ de points d'émission $EP_{pq}^{ij}$ de la zone d'émission élémentaire $\mathcal{Z}^{ij}$.

Avantageusement, pour chaque zone d'émission élémentaire $\mathcal{Z}^{ij}$, la répartition des points d'émission $EP_{pq}^{ij}$ pour chaque distribution de points d'émission $EPD_{uv}^{ij}$ peut être déterminée de façon aléatoire ou pseudo-aléatoire. Par exemple et sans limitation, la répartition des points d'émission $EP_{pq}^{ij}$ peut être déterminée à partir de la sélection aléatoire ou pseudo-aléatoire de $m_x^{ij}$ indices $p$ et de $m_y^{ij}$ indices $q$ associés respectivement aux différents guides d'ondes $g_p^{ij}$ et aux différentes électrodes $e_q^{ij}$ constituant la zone d'émission élémentaires $\mathcal{Z}^{ij}$.

Chaque distribution de points d'émission $EPD_{uv}^{ij}$ est associée au point projeté sur la rétine R, noté alors $R_{uv}^{ij}$. Ainsi, le nombre de distribution de points d'émission $EPD_{uv}^{ij}$ d'une zone d'émission élémentaire $\mathcal{Z}^{ij}$ est égal au nombre $\left(n_x^{ij} \times n_y^{ij}\right)$ de pixels de l'image à projeter associés aux points $R_{uv}^{ij}$ projetés sur la rétine R par la zone d'émission élémentaire $\mathcal{Z}^{ij}$. Les entiers $n_x^{ij}$ et $n_y^{ij}$ sont des nombres de pixels définis respectivement selon l'axe X et sur l'axe Y, avec $n_x^{ij} \in [1, N_x]$ et $n_y^{ij} \in [1, N_y]$. Par exemple, les $\left(n_x^{ij} \times n_y^{ij}\right)$ pixels de l'image à projeter peuvent être identiques pour chaque zone d'émission élémentaire $\mathcal{Z}^{ij}$ de la surface d'émission S. Les entiers $n_x^{ij}$ et $n_y^{ij}$ peuvent être définis à partir du nombre total de pixels $(N_x \times N_y)$ de l'image à projeter et du nombre total de zones élémentaires $(L_x \times L_y)$ discrétisant la surface d'émission S, selon les équations (01) et (02) suivantes :

$$n_x^{ij} = \frac{N_x}{L_x} \qquad (01)$$

$$n_y^{ij} = \frac{N_y}{L_y} \qquad (02)$$

Par exemple, une image à projeter peut comprendre $(400 \times 200)$ pixels et une surface d'émission S peut être discrétisée en $(16 \times 12)$ zones d'émission élémentaires $\mathcal{Z}^{ij}$. Dans ce cas, chaque zone $\mathcal{Z}^{ij}$ peut comprendre par exemple $(25 \times 17)$ pixels de l'image à projeter (c'est-à-dire points $R_{uv}^{ij}$ projetés sur la rétine R) à partir d'un nombre de $(25 \times 17)$ distributions de points d'émission $EPD_{uv}^{ij}$ correspondantes.

Dans le cas où, pour chaque zone d'émission élémentaire $\mathcal{Z}^{ij}$, les nombres $\left(n_x^{ij} \times n_y^{ij}\right)$ de pixels de l'image à projeter sont identiques, les indices $u^{ij}$ et $v^{ij}$ correspondent aux intervalles d'indices peuvent être définis à partir des indices $(i, j)$ de la zone $\mathcal{Z}^{ij}$, du nombre total de pixels $(N_x \times N_y)$ de l'image à projeter et du nombre total de zones élémentaires $(L_x \times L_y)$ discrétisant la surface d'émission S, et selon les expressions (03) et (04) suivantes :

$$u^{ij} \in \left[(i-1) \times \tfrac{N_x}{L_x} + 1; \; i \times \tfrac{N_x}{L_x}\right] \qquad (03)$$

$$v^{ij} \in \left[(j-1) \times \tfrac{N_y}{L_y} + 1; \; j \times \tfrac{N_y}{L_y}\right] \qquad (04)$$

Pour chaque zone d'émission élémentaire $\mathcal{Z}^{ij}$, un point d'émission $EP_{pq}^{ij}$ d'une distribution de points d'émission $EPD_{uv}^{ij}$ peut être associé à un vecteur d'onde $\vec{k}_{uv}^{ij}$ contenu dans un domaine angulaire, représenté par les gammes angulaires $\Delta\varphi$ et $\Delta\psi$, et défini à partir du nombre total de zones élémentaires ($L_x \times L_y$) discrétisant la surface d'émission S, selon les équations (05) et (06) suivantes :

$$\Delta\varphi = \tfrac{\theta_x}{L_x} \qquad (05)$$

$$\Delta\psi = \tfrac{\theta_y}{L_y} \qquad (06)$$

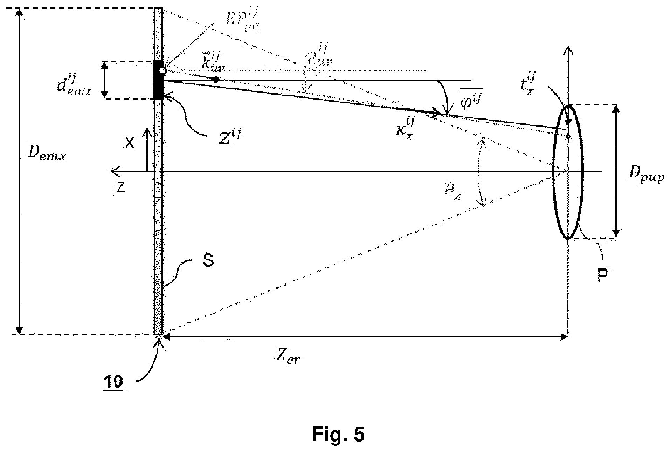

Dans les équations (05) et (06) précédentes, les grandeurs $\theta_x$ et $\theta_y$ correspondent à des projections angulaires respectivement sur l'axe X et l'axe Y du cône de visualisation $\theta$ (appelé encore champ de vision ou FOV, *field of view* selon l'expression anglo-saxonne correspondante) de la surface d'émission S du dispositif de projection d'image 10 par un œil, comme illustré sur les figures 3 et 5.

En particulier, pour chaque zone d'émission élémentaire , le domaine angulaire ($\Delta\varphi, \Delta\psi$) peut être dirigé selon un vecteur central $\vec{\kappa}^{ij}$ orienté de la zone d'émission élémentaire $\mathcal{Z}^{ij}$ vers un point d'impact central $t^{ij}$ dans le plan (X,Y) au niveau de la pupille P. La direction angulaire du vecteur central $\vec{\kappa}^{ij}$ dans le plan (X,Y,Z) est caractérisé par des angles $\overline{\varphi^{ij}}$ et $\overline{\psi^{ij}}$ déterminés par rapport à l'axe optique Z dans les plans (X,Z) et (Y,Z) respectivement. A titre d'illustration, la projection $\kappa_x^{ij}$ dans le plan (X,Z) du vecteur central $\vec{\kappa}^{ij}$ du domaine angulaire de la zone d'émission élémentaire $\mathcal{Z}^{ij}$ est représentée sur la figure 5. L'angle $\overline{\varphi^{ij}}$ correspond à l'angle entre l'axe optique Z et la direction de la projection $\kappa_x^{ij}$ de la zone d'émission élémentaire $\mathcal{Z}^{ij}$ vers la coordonnée $t_x^{ij}$ du point impact central $t^{ij}$ sur l'axe X, comme représenté sur la figure 5. Les angles $\overline{\varphi^{ij}}$ et $\overline{\psi^{ij}}$ associés au vecteur central $\vec{\kappa}^{ij}$ peuvent être définis à partir du domaine angulaire, du nombre total de zones élémentaires ($L_x \times L_y$) discrétisant la surface d'émission S et de la position de la zone d'émission élémentaire $\mathcal{Z}^{ij}$ sur la surface d'émission S (représentée par exemple par les indices (i,j) de la zone $\mathcal{Z}^{ij}$). Les angles $\overline{\varphi^{ij}}$ et $\overline{\psi^{ij}}$ associés au vecteur central $\vec{\kappa}^{ij}$ peuvent ainsi être définis selon les équations (07) et (08) suivantes :

$$\overline{\varphi^{ij}} = \Delta\varphi \times \left(i - \tfrac{L_x+1}{2}\right) \qquad (07)$$

$$\overline{\psi^{ij}} = \Delta\psi \times \left(j - \tfrac{L_y+1}{2}\right) \qquad (08)$$

Avantageusement, pour chaque point d'émission $EP_{pq}^{ij}$ correspondant à l'intersection d'un guide d'onde $g_p$ et d'une électrode $e_q$ d'une distribution de points d'émission $EPD_{uv}^{ij}$ d'une zone d'émission élémentaire $\mathcal{Z}^{ij}$ (comme représenté sur la figure 4), la direction angulaire du vecteur d'onde $\vec{k}_{uv}^{ij}$ dans le plan (X,Y,Z) peut être caractérisé par des angles $\varphi_{uv}^{ij}$ et $\psi_{uv}^{ij}$ déterminés par rapport à l'axe optique Z dans les plan (X,Z) et (Y,Z) respectivement. En particulier, chaque hologramme $h_{pq}$ associé à un point d'émission $EP_{pq}^{ij}$ de la distribution de points d'émission $EPD_{uv}^{ij}$ peut encoder les directions angulaires $\varphi_{uv}^{ij}$ et $\psi_{uv}^{ij}$ définis selon les équations (09) et (10) suivantes :

$$\varphi_{uv}^{ij} = \left(u^{ij} - 1\right) \times \delta - \frac{\theta_x}{2} \qquad (09)$$

$$\psi_{uv}^{ij} = \left(v^{ij} - 1\right) \times \delta - \frac{\theta_y}{2} \qquad (10)$$

Dans les équations (09) et (10) précédentes, la grandeur $\delta$ correspond à la résolution angulaire de l'image et dépend du niveau de netteté désirée sur l'affichage. Par exemple, une résolution angulaire $\delta$ considérée comme une valeur de limite visuelle de résolution angulaire (c'est-à-dire une limite séparable) correspond à un angle d'une minute d'arc égale à l'angle de 1/60 ~ 0,02° (et converti en radians dans les calculs des équations précédentes). Il est à noter que les équations (09) et (10) précédentes sont donc obtenues avec une approximation des petits angles (i.e. $\tan \delta \approx \delta$). Il peut dans ce cas être considéré qu'en dessous de cette valeur l'œil ne peut pas percevoir la pixellisation d'une image à projeter sur la rétine R.

Pour chaque zone d'émission élémentaire $\mathcal{Z}^{ij}$, les faisceaux émis par les points d'émission $EP_{pq}^{ij}$ peuvent impacter le plan de la pupille P autour du point d'impact central $t^{ij}$ sur une étendue d'impact $w^{ij}$. Par exemple et sans limitation, l'étendue d'impact $w^{ij}$ peut être considérée uniforme pour toutes les zones d'émission élémentaires $\mathcal{Z}^{ij}$ de la surface d'émission S. L'étendue $w^{ij}$ des impacts des points d'émission $EP_{pq}^{ij}$ dans le plan de la pupille P peut notamment prendre en compte l'étendue du domaine angulaire de la zone d'émission élémentaire $\mathcal{Z}^{ij}$ et la contribution d'une diffraction des points d'émission.

Les coordonnées $t_x^{ij}$ et $t_y^{ij}$ du point d'impact central $t^{ij}$ sur l'axe X et l'axe Y respectivement, dans le plan de la pupille P, peuvent être exprimés selon les équations (11) et (12) suivantes :

$$t_x^{ij} = \left(i - \frac{L_x+1}{2}\right) \times d_{emx}^{ij} + \left(\overline{\varphi^{ij}} \times Z_{er}\right) \qquad (11)$$

$$t_y^{ij} = \left(j - \frac{L_y+1}{2}\right) \times d_{emy}^{ij} + \left(\overline{\psi^{ij}} \times Z_{er}\right) \qquad (12)$$

Dans les équations (11) et (12) précédentes, les grandeurs $d_{emx}^{ij}$ et $d_{emy}^{ij}$ correspondent à la taille de la zone d'émission élémentaire $\mathcal{Z}^{ij}$ selon l'axe X et l'axe Y respectivement, comme représenté sur la figure 5. Les tailles $d_{emx}^{ij}$ et $d_{emy}^{ij}$ peuvent dépendre des dimensions associées aux guides d'ondes et aux d'électrodes, de leurs répartition dans le plan de surface d'émission S, ainsi que des nombres $m_x^{ij}$ de guides d'ondes $g_p$ et $m_y^{ij}$ d'électrodes $e_q$ de la zone élémentaire $\mathcal{Z}^{ij}$.

La discrétisation de la surface d'émission S en zones d'émission élémentaires $\mathcal{Z}^{ij}$ peut être uniforme, les grandeurs $d_{emx}^{ij}$ et $d_{emy}^{ij}$ étant alors des valeurs de tailles constantes pour toutes les zones élémentaires $\mathcal{Z}^{ij}$, et pouvant être définies à partir de la taille de la surface d'émission S et du nombre total de zones élémentaires ($L_x \times L_y$) discrétisant la surface S, selon les équations (13) et (14) suivantes :

$$d_{emx}^{ij} = \frac{D_{emx}}{L_x} \qquad (13)$$

$$d_{emy}^{ij} = \frac{D_{emy}}{L_y} \qquad (14)$$

Par exemple et sans limitation, les grandeurs $d_{emx}^{ij}$ et $d_{emy}^{ij}$ peuvent être équivalentes à une même grandeur $\phi$ égale à 0.5 mm. Dans les équations (13) et (14) précédentes, les grandeurs $D_{emx}$ et $D_{emy}$ correspondent à la taille de la surface d'émission S selon l'axe X et l'axe Y respectivement, comme représentées sur les figures 3 et 5. En particulier, la taille de la surface d'émission S peut être déterminée en fonction du diamètre $D_{pup}$ de la pupille d'œil (typiquement non négligeable et choisie égale à 4 mm typiquement). En effet, la taille de la surface d'émission S peut être déterminée de manière à être supérieure à la taille d'une zone couverte uniquement par la prise en compte du cône de visualisation $\theta$, c'est-à-dire en prenant en compte le diamètre $D_{pup}$ de la pupille. Les grandeurs $D_{emx}$ et $D_{emy}$ peuvent alors être définies, avec une approximation des petits angles, selon les équations (15) et (16) suivantes :

$$D_{emx} = \left( Z_{er} \times \delta \times N_x \right) + D_{pup} \qquad (15)$$

$$D_{emy} = \left( Z_{er} \times \delta \times N_y \right) + D_{pup} \qquad (16)$$

La discrétisation de la surface d'émission S en zones d'émission élémentaires $\mathcal{Z}^{ij}$ peut également être uniforme, le nombre $m_x^{ij}$ de guides d'ondes $g_p$ dans une zone élémentaire et le nombre $m_y^{ij}$ d'électrodes $e_q$ dans une zone élémentaire étant alors des valeurs constantes pour toutes les zones élémentaires $\mathcal{Z}^{ij}$ et pouvant être définies à partir du nombre total des ($M_x \times M_y$) points d'émission de la surface d'émission S et du nombre total de zones élémentaires ($L_x \times L_y$) discrétisant la surface S, selon les équations (17) et (18) suivantes :

$$m_x^{ij} = \frac{M_x}{L_x} \qquad (17)$$

$$m_y^{ij} = \frac{M_y}{L_y} \qquad (18)$$

Alternativement, la discrétisation de la surface d'émission S en zones élémentaires $\mathcal{Z}^{ij}$ peut être non uniforme, le nombre $m_x^{ij}$ de guides d'ondes $g_p$ et le nombre $m_y^{ij}$ d'électrodes $e_q$ étant définis par exemple selon des fonctions croissantes et/ou décroissantes en fonction respectivement des axes X et Y. La non uniformité de la discrétisation de la surface d'émission S en zones élémentaires $\mathcal{Z}^{ij}$ peut similairement se traduire par des grandeurs $d_{emx}^{ij}$ et $d_{emy}^{ij}$ non homogènes en fonction respectivement des axes X et Y.

En particulier, il est à noter que les grandeurs associées à la surface d'émission S et aux différentes zones élémentaires sont exprimées, dans les équations précédentes, en utilisant l'approximation des petits angles à titre de simplification. Cette approximation est applicable pour une taille de surface d'émission S faible (i.e. cône de visualisation $\theta$ faible) et/ou une surface d'émission S centrée par rapport à l'axe optique Z du regard de l'utilisateur du système. Alternativement, si l'approximation des petits angles ne peut plus être applicable (i.e. $\tan \delta \neq \delta$) les formules des équations précédentes, notamment (09), (10), (15) et (16), sont plus complexes. Dans ce cas, des zones élémentaires périphériques d'une surface d'émission S peuvent être élargies dans le plan (X,Y) pour les angles de vision élevées par rapport aux zones élémentaires dites centrales par rapport à l'axe optique Z de cette même surface d'émission S.

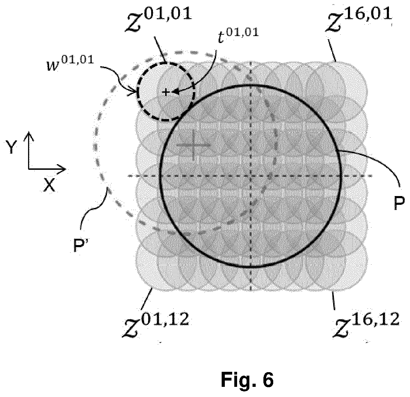

La figure 6 représente un schéma de l'ensemble des étendues d'impact $w^{ij}$ (i.e. zones d'éclairement sur la pupille) aux positions de point d'impact central $t^{ij}$ pour une surface d'émission S discrétisée par exemple en (16 $\times$ 12) zones d'émission élémentaires $\mathcal{Z}^{ij}$ de dimension $\phi$ égale à 0.5 mm et selon un champ de vision défini par des grandeurs $\theta_x$ et $\theta_y$ égales à (12°, 6°). Dans cet exemple, les points d'émission $EP_{pq}$ ont des tailles similaires sur toute la surface d'émission S, définies par un diamètre $\omega_1$ de 4 µm. Ainsi, pour chaque zone d'émission élémentaire $z^{ij}$, la dimension de l'étendue d'impact $w^{ij}$ (c'est-à-dire la 'tache' de diffraction au niveau de l'œil) est égale à 850 µm.

Comme représenté sur la figure 6, suivant le dimensionnement du dispositif 10 et de façon générale du système optique portable d'affichage de données transparent, certaines coordonnées $t_x^{ij}$ et $t_y^{ij}$ du point d'impact central $t^{ij}$ d'une zone d'émission élémentaire $\mathcal{Z}^{ij}$ peuvent être positionnées en dehors de la pupille P sur la plan (X,Y). Dans ce cas, une partie au moins des pixels associés aux indices $u^{ij}$ et $v^{ij}$ n'est pas projeté sur la rétine R de l'œil car une partie au moins de l'énergie lumineuse associé aux points d'émission $EP_{pq}^{ij}$ des distributions de points d'émission $EPD_{uv}^{ij}$ ne pénètre pas la pupille représentée par le cercle P sur la figure 6.

Cependant, cet effet est en partie compensé par l'orientation de l'œil dans son orbite conduisant à un déplacement de la position de la pupille P. En effet, comme illustré par le cercle P' en pointillé sur la figure 6, la position de la pupille peut être décalée dans le plan (X,Y) lorsque l'œil cible une direction différente à la direction de l'axe optique Z. Sur la figure 6, et selon le dimensionnement présenté, le décalage de la position de la pupille P' représente une cible selon une direction -6°: +3°, c'est-à-dire la direction concernée par l'émission d'un signal lumineux provenant de la zone d'émission élémentaire $\mathcal{Z}^{01,01}$. Dans ce cas, les pixels associés peuvent être projetés sur la rétine R de l'œil car l'énergie lumineuse associée aux points d'émission $EP_{pq}^{ij}$ des distributions de points d'émission $EPD_{uv}^{ij}$ pénètre la pupille P'. Le mouvement de l'œil dans son orbite permet donc de gérer la dispersion des signaux dans le plan de la pupille.

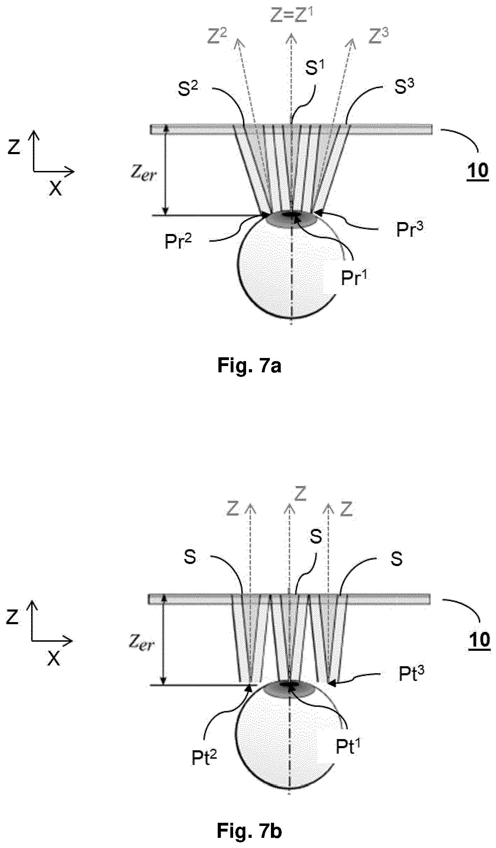

Avantageusement, pour étendre le cône de visualisation $\theta$ du dispositif de projection d'image 10 par un œil, c'est-à-dire la gamme angulaire de projection d'image, la surface d'émission S peut être reproduite dans le plan (X,Y). En particulier, le dispositif de projection d'image 10 peut comprendre un nombre fini de surfaces d'émission $S^{xy}$ distinctes réparties dans le plan (X,Y). Pour chaque surface d'émission $S^{xy}$, chaque hologramme $h_{pq}$ associé à un point d'émission $EP_{pq}^{ij}$ d'une distribution de points d'émission $EPD_{uv}^{ij}$ peut encoder les directions angulaires $\varphi_{uv}^{ij}$ et $\psi_{uv}^{ij}$ déterminées par rapport à un axe optique $Z^{xy}$ mis en rotation dans les plans (X,Z) et (Y,Z) et centrées par rapport au point $Pr^{xy}$ correspondant à la position du centre de la pupille de l'œil après rotation dans son orbite et selon la direction angulaire de la zone de la surface d'émission $S^{xy}$ concernée. Le dispositif de projection d'image 10 schématisé sur la figure 7a représente les surfaces d'émission $S^1$, $S^2$ et $S^3$ positionnées consécutivement selon l'axe X et présentant des projections de cônes angulaires différentes selon l'axe optique $Z^1$=Z et les axes optiques mis en rotation $Z^2$ et $Z^3$ centrées respectivement sur les points $Pr^1$, $Pr^2$ et $Pr^3$ de la projection du centre de la pupille P sur l'axe X.

En particulier, dans le cas des axes optiques $Z^{xy}$ mis en rotation par rapport à l'axe optique Z du regard de l'utilisateur du système, l'approximation des petits angles peut ne plus être applicable (i.e. $\tan \delta \neq \delta$) pour des angles de vision élevés. Dans ce cas, les surfaces d'émission $S^{xy}$ peuvent être élargies dans le plan (X,Y) pour les angles de vision élevées par rapport à une surface d'émission dite centrale par rapport à l'axe optique Z. Sur la figure 7a, les surfaces d'émission $S^2$ et $S^3$, associées aux axes optiques mis en rotation $Z^2$ et $Z^3$, sont plus grandes que la surface d'émission centrale $S^1$ associée à l'axe optique Z=$Z^1$.

En outre, pour étendre la taille de la « boîte à œil », c'est-à-dire la zone dans laquelle l'utilisateur (et donc son œil) peut se déplacer devant le dispositif de projection d'image 10 tout en continuant à voir l'intégralité de l'image, la surface d'émission S peut également être dupliquée dans le plan (X,Y). Dans ce cas, le dispositif de projection d'image 10 peut comprendre un nombre fini d'une même surface d'émission S répartie dans le plan (X,Y). Pour chaque surface d'émission S répartie, chaque hologramme $h_{pq}$ associé à un point d'émission $EP_{pq}^{ij}$ d'une distribution de points d'émission $EPD_{uv}^{ij}$ peut encoder les directions angulaires $\varphi_{uv}^{ij}$ et $\psi_{uv}^{ij}$ déterminées par rapport à l'axe optique Z dans les plans (X,Z) et (Y,Z) et centrées par rapport au point $Pt^{xy}$ correspondant à la position du centre de la pupille de l'œil après translation dans le plan (X,Y). Le dispositif de projection d'image 10 schématisé sur la figure 7b représente trois fois la même surface d'émission S positionnée consécutivement selon l'axe X et présentant les trois mêmes projections $\theta_x$ de cône angulaire selon l'axe optique Z centrées respectivement sur les points $Pt^1$, $Pt^2$ et $Pt^3$ de la projection du centre de la pupille P translatée sur l'axe X.

Par exemple et sans limitation, dans les cas schématisés sur les figures 7a et 7b, pour dupliquer ou reproduire des surfaces d'émission, la longueur des guides d'ondes $g_p$ peut être prolongée le long de l'axe X, et des ensembles de $M_y$ électrodes $e_q$ peuvent être dupliqués (notamment ici trois fois) dans la direction longitudinale des guides pour former les surfaces d'émission S et/ou $S^1$, $S^2$ et $S^3$. Similairement, la longueur des électrodes $e_q$ peut être prolongée le long de l'axe Y, et des ensembles de $M_x$ de guides d'ondes $g_p$ peuvent être dupliqués dans la direction transversale des guides pour former de nouvelles surfaces d'émission S et/ou $S^{xy}$.

La discrétisation de la surface d'émission S en zones d'émission élémentaires $\mathcal{Z}^{ij}$ permet d'augmenter

significativement la densification des points d'émission $EP_{pq}^{ij}$ d'une même distribution de points d'émission $EPD_{uv}^{ij}$. En particulier, la densité $\rho$ des points d'émission peut être définie selon l'expression (19) suivante :

$$\rho = \frac{1}{\phi^2} \times \left[ \left( Z_{er}^2 \times \delta^2 \right) + \left( \frac{D_{pup}^2}{N_x \times N_y} \right) + \left( Z_{er} \times \delta \times D_{pup} \times \frac{N_x + N_y}{N_x \times N_y} \right) \right] \qquad (19)$$

Le nombre $n_{em/EPD}$ de points d'émission $EP_{pq}$ d'une même distribution de points d'émission peut être approximé à partir de la taille de la surface d'émission S, la surface $s_{em}$ du point d'émission $EP_{pq}$, et du nombre de pixels ($N_x \times N_y$) de l'image à projeter, tel que défini selon l'expression (20) suivante :

$$n_{em/EPD} = \frac{D_{emx} \times D_{emy}}{s_{em} \times (N_x \times N_y)} \qquad (20)$$

Par exemple et sans limitation, le nombre $n_{em/EPD}$ peut être égal environ à 50. Pour une image à projeter de (400 $\times$ 200) pixels et une discrétisation de la surface d'émission S en (16 $\times$ 12) zones d'émission élémentaires $\mathcal{Z}^{ij}$, la densité $\rho$ de points d'émission $EP_{pq}^{ij}$ d'une même distribution de points d'émission $EPD_{uv}^{ij}$ peut être égale selon l'équation (19) précédente à environ 0,24%. Dans l'équation (20) précédente, la surface $s_{em}$ du point d'émission $EP_{pq}$ peut être définie à partir du diamètre $\omega_1$ du point d'émission $EP_{pq}$ selon l'expression (21) suivante :

$$s_{em} = \pi \times \frac{\omega_1^2}{4} \qquad (21)$$

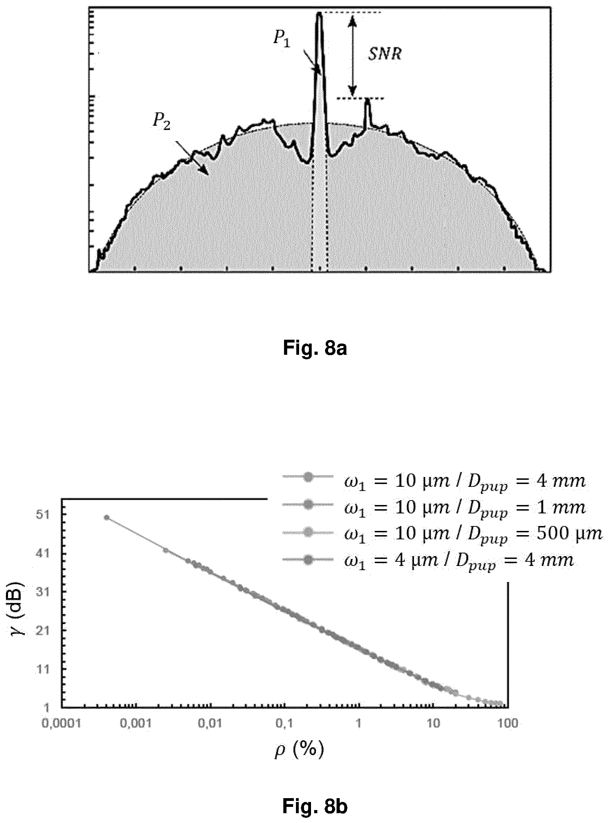

Il est à noter qu'il existe au moins un critère pour quantifier la qualité de l'image formée sur la rétine R par auto-focalisation des points d'émission $EP_{pq}$ d'une même distribution de points d'émission $EPD_{uv}$. En particulier, pour quantifier l'efficacité de l'auto-focalisation, un ratio de puissance noté $\gamma$ peut être défini à partir de la distribution spatiale de l'intensité de la réponse percussionnelle (désignée par l'acronyme PSF, ou *Point Spread Function* selon l'expression anglo-saxonne correspondante), formée par une distribution de points d'émission $EPD_{uv}$ à un point $R_{uv}$ sur la rétine R de l'œil, tel que représenté sur la figure 8a. Le ratio de puissance $\gamma$ peut être exprimé selon l'expression (22) suivante :

$$(22) \quad \gamma = -10 \log_{10} \frac{P_1}{P_1 + P_2}$$

Dans l'équation (22) précédente, la grandeur $P_1$ correspond à la puissance du pic central d'intensité formé par la distribution de points d'émission $EPD_{uv}$, c'est-à-dire l'aire du pic central représentée en gris clair sur la figure 8a. $P_1 + P_2$ désigne la puissance lumineuse totale, la grandeur $P_2$ correspondant à la puissance du bruit d'intensité formé par la distribution de points d'émission $EPD_{uv}$, c'est-à-dire la zone périphérique du pic central représentée en gris foncé du pic central représenté en gris.

Le ratio de puissance $\gamma$ est optimal pour une puissance $P_2$ nulle du bruit d'intensité formé par le point d'émission (valeur de $\gamma$ tendant vers 0). La figure 8b représente l'évolution du ratio de puissance $\gamma$ selon la variation de la densité $\rho$ des points d'émission $EP_{pq}$ d'une même distribution de points d'émission $EPD_{uv}$, et en fonction de différents paramètres caractéristiques (par exemple des dimensions caractéristiques) du système optique portable d'affichage de données transparent. Le critère $\gamma$ de quantification de la qualité de l'image est donc bien relié à la densité de surface de répartition des points d'émission $EP_{pq}$ sur la surface d'émission S, comme illustré sur la figure 8b. Or, la discrétisation de la surface d'émission S en zones d'émission élémentaires $\mathcal{Z}^{ij}$ permet d'augmenter significativement la densification des points d'émission $EP_{pq}^{ij}$ d'une même distribution de points d'émission $EPD_{uv}^{ij}$, ce qui permet ainsi un gain significatif (d'au moins 9 dB) sur la valeur du critère $\gamma$ par rapport à une configuration sans discrétisation de la surface (c'est-à-dire pour $\rho_0 = 0,001\%$).

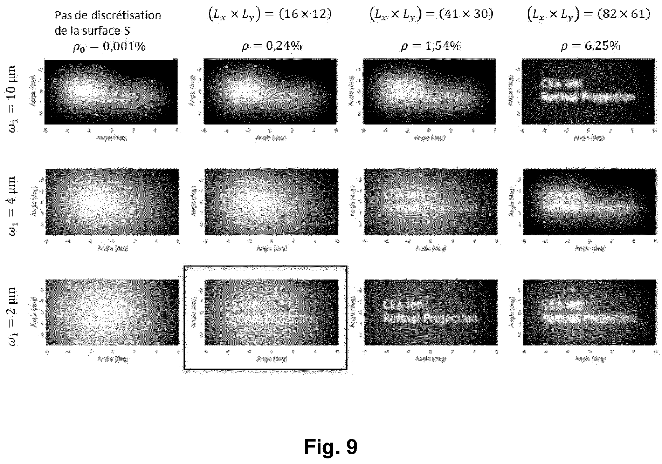

La figure 9 illustre les résultats de simulations d'image pour différentes dimensions comparatives du dispositif de projection d'image 10. En particulier, les résultats de simulations sont effectuées en fonction de la discrétisation de la surface d'émission S via le nombre ($L_x \times L_y$) de zones élémentaires $\mathcal{Z}^{ij}$ d'une part et en fonction de la taille des points d'émission $EP_{pq}$ définie par le diamètre $\omega_1$ d'autre part, et pour une image à projeter de ($400 \times 200$) pixels représentant les mots « *CEA leti Retinal Projection* » (signifiant 'CEA leti Projection Rétinienne'). En particulier, la variation du nombre ($L_x \times L_y$) de zones élémentaires $\mathcal{Z}^{ij}$ induit une variation de la taille de la zone d'émission ($\phi$ ou plus généralement les grandeurs $d^{ij}_{emx}$ et $d^{ij}_{emy}$) et ainsi une variation de la densité $\rho$ des points d'émission $EP_{pq}$ pour chaque distribution de points d'émission $EPD_{uv}$.

Comme illustré par les résultats de simulations d'image sur la figure 9, la mise en place de la discrétisation de la surface d'émission S, puis la réduction de la taille de la zone d'émission (i.e. augmentation de la densité) permet une amélioration du contraste de l'image à projeter. Cependant, l'augmentation de la taille de la zone d'émission induit une réduction du flou sur l'image à projeter. Il est également à noter que la réduction de la taille des points d'émission (i.e. faible valeur de diamètre $\omega_1$) induit une augmentation de la proportion de l'étendue du bruit d'intensité formé par les points d'émission par rapport au pic central d'émission et ainsi une réduction de l'impact de ce bruit sur la construction de l'image sur la rétine R. Par conséquent, les résultats de simulations d'image, illustrés par la figure 9, permettent d'indiquer un dimensionnement optimal possible avec des points d'émission compris entre 2 $\mu$m et 4 $\mu$m de diamètre et une taille de zone d'émission élémentaires $\mathcal{Z}^{ij}$ comprise entre 200 $\mu$m et 800 $\mu$m.

La fabrication d'un dispositif de projection d'une image 10 est mise en œuvre à partir d'un procédé comprenant une phase de conception et une phase de fabrication matérielle du dispositif (10) ainsi conçu.

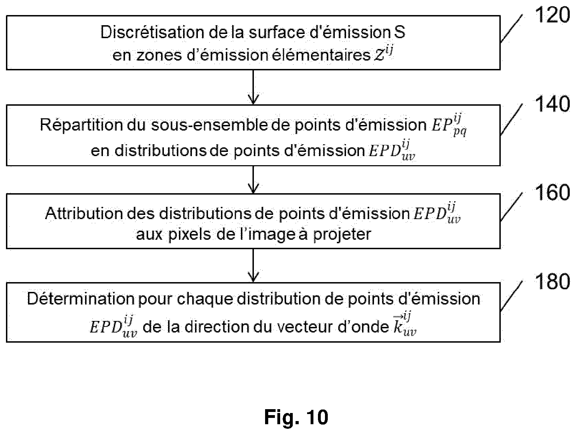

La figure 10 est un organigramme représentant des étapes de la phase de conception du dispositif de projection d'une image 10, selon des modes de réalisation de l'invention.

La phase de conception du dispositif de projection d'une image peut par exemple être mise en œuvre par ordinateur.

A l'étape 120, une discrétisation de la surface d'émission S en ($L_x \times L_y$) de zones d'émission élémentaires $\mathcal{Z}^{ij}$ peut être appliquée de manière à ce que chaque zone d'émission élémentaire $\mathcal{Z}^{ij}$ comprenne un sous-ensemble de $\left( m^{ij}_x \times m^{ij}_y \right)$ de points d'émission $EP^{ij}_{pq}$.

A l'étape 140, une répartition du sous-ensemble de $\left( m^{ij}_x \times m^{ij}_y \right)$ de points d'émission $EP^{ij}_{pq}$ selon $\left( n^{ij}_x \times n^{ij}_y \right)$ distributions de points d'émission $EPD^{ij}_{uv}$ est effectuée.

A l'étape 160, pour chaque zone d'émission élémentaire $\mathcal{Z}^{ij}$, les $\left( n^{ij}_x \times n^{ij}_y \right)$ distributions de points d'émission $EPD^{ij}_{uv}$ sont affectées (c'est-à-dire associées ou attribuées) à $\left( n^{ij}_x \times n^{ij}_y \right)$ de pixels de l'image à projeter.

A l'étape 180, pour chaque distribution de points d'émission $EPD^{ij}_{uv}$, la direction du vecteur d'onde $\vec{k}^{ij}_{uv}$ de l'onde lumineuse résultante émise par les points d'émission $EP^{ij}_{pq}$ de la distribution de points d'émission $EPD^{ij}_{uv}$ est déterminée de sorte que la direction $\vec{k}^{ij}_{uv}$ est contenue dans un domaine angulaire dirigé selon un vecteur central $\vec{k}^{ij}$ défini à partir du nombre ($L_x \times L_y$) de zones d'émission élémentaires $\mathcal{Z}^{ij}$ discrétisant la surface d'émission S et de la position de la zone d'émission élémentaire $\mathcal{Z}^{ij}$ sur la surface d'émission S.

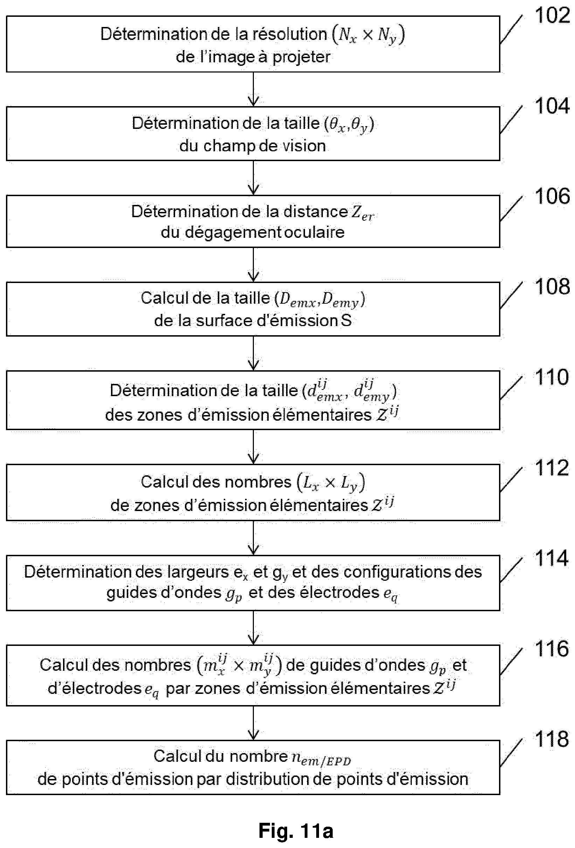

La figure 11a est un organigramme représentant des exemples de sous-étapes de l'étape 120 de discrétisation de la surface d'émission S dans la phase de conception du dispositif de projection d'une image 10, selon des modes de réalisation de l'invention.

A la sous-étape 102, la résolution de l'image à projeter peut être déterminée. Par exemple, la résolution ($N_x \times N_y$) de l'image à projeter peut être choisie égale à ($400 \times 200$). A la sous-étape 104, la taille du champ de vision peut être déterminée. Par exemple, les grandeurs $\theta_x$ et $\theta_y$ du champ de vision peuvent être choisies égales à 12° et 6° respectivement. A la sous-étape 106, la distance du dégagement oculaire peut être déterminée. Par exemple, la distance $Z_{er}$ du dégagement oculaire peut être choisie égale à 20 mm. A la sous-étape 108, la taille de la surface d'émission S peut être calculée à partir des valeurs fixées aux sous-étapes 102 à 106. Selon les équations (15) et (16), les grandeurs $D_{emx}$ et

$D_{emy}$ de la surface d'émission S peuvent être égales à environ 8 mm et 6 mm respectivement.

A la sous-étape 110, la taille des zones d'émission élémentaires $\mathcal{Z}^{ij}$ peut être déterminée. Par exemple, les grandeurs $d_{emx}^{ij}$ et $d_{emy}^{ij}$ des zones d'émission élémentaires peuvent être choisies égales à 500 µm. A la sous-étape 112, le nombre de zones d'émission élémentaires $\mathcal{Z}^{ij}$ peut être calculé des grandeurs $D_{emx}$ et $D_{emy}$ et des valeurs fixées à la sous-étape 110. Selon les équations (13) et (14), le nombre $(L_x \times L_y)$ de zones d'émission élémentaires $\mathcal{Z}^{ij}$ peut être égale à environ $(19 \times 12)$. Le nombre de pixels définis par zones d'émission élémentaires $\mathcal{Z}^{ij}$ peut alors être déduit à partir des résultats de la sous-étape 110 et des valeurs fixées à la sous-étape 102. Par exemple, le nombre $\left(n_x^{ij} \times n_y^{ij}\right)$ de pixels, i.e. distribution de points d'émission, à encoder par zones d'émission élémentaires peut être égale à environ 350.

Avantageusement, à la sous-étape 114, des largeurs $e_x$ et $g_y$ et des configurations des guides d'ondes $g_p$ et des électrodes $e_q$ peuvent être déterminée. A la sous-étape 116, les nombres $\left(m_x^{ij} \times m_y^{ij}\right)$ de guides d'ondes $g_p$ et d'électrodes $e_q$ par zone d'émission élémentaire $\mathcal{Z}^{ij}$ peuvent être calculés à partir des résultats de la sous-étape 114. Et à la sous-étape 118, le nombre maximal $n_{em/EPD}$ de points d'émission par distribution de points d'émission peut être calculé à partir des nombres de guides d'ondes $g_p$ et d'électrodes $e_q$, et de la résolution de l'image à projeter (ou nombre $\left(n_x^{ij} \times n_y^{ij}\right)$ de pixels, i.e. distribution de points d'émission, par zones d'émission élémentaires $\mathcal{Z}^{ij}$ par exemple).

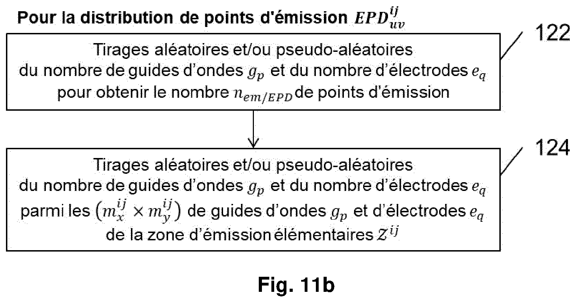

La figure 11b est un organigramme représentant des exemples de sous-étapes de l'étape 140 de répartition des points d'émission d'une distributions $EPD_{uv}^{ij}$ dans la phase de conception du dispositif de projection d'une image 10, selon des modes de réalisation de l'invention.

A la sous-étape 122, le nombre de guides d'ondes $g_p$ et le nombre d'électrodes $e_q$ peuvent être déterminés par tirages aléatoires et/ou pseudo-aléatoires, en particulier pour obtenir (ou s'approcher) le nombre $n_{em/EPD}$ de points d'émission. Par exemple, le nombre maximal $n_{em/EPD}$ de points d'émission par distribution de points d'émission calculé à la sous-étape 118 peut être égal à 50. Le nombre de guides d'ondes peut être égal à 10 et le nombre d'électrodes peut être égal à 5.

A la sous-étape 124, la position des guides d'ondes $g_p$ et la position des d'électrodes $e_q$ parmi les $\left(m_x^{ij} \times m_y^{ij}\right)$ de guides d'ondes $g_p$ et d'électrodes $e_q$ de la zone d'émission élémentaires $\mathcal{Z}^{ij}$ peuvent être déterminées par tirages aléatoires et/ou pseudo-aléatoires.

Les sous-étapes 122 et 124 peuvent être appliquées pour chaque distribution de points d'émission $EPD_{uv}^{ij}$ de manière séquentielle par exemple. Les tirages pseudo-aléatoires effectués pour une distribution $EPD_{uv}^{ij}$ peuvent prendre en compte les résultats préalables des sous-étapes 122 et 124 d'une ou plusieurs autres distributions de points d'émission d'une même zone d'émission élémentaire $\mathcal{Z}^{ij}$, tel qu'un couple d'un guide d'onde $g_p$ et d'une électrode $e_q$ représentant un point d'émission $EP_{pq}^{ij}$ spécifique ne peut être associé qu'à une unique distribution de points d'émission $EPD_{uv}^{ij}$.

La phase de fabrication matérielle du dispositif (10) prend en compte les résultats de la phase de conception préalablement mise en œuvre. La phase de fabrication matérielle peut comprendre des étapes de fabrication de guides d'ondes, de réseaux de diffraction et d'électrodes, par des techniques conventionnelles, telles que par exemple et sans limitations des techniques de dépôt chimique ou physique. La phase de fabrication matérielle peut également comprendre des étapes d'assemblage de couches.

En outre, la phase de fabrication matérielle peut comprendre une étape d'enregistrement des hologrammes $h_{pq}$, chaque hologramme étant associé à un point d'émission $EP_{pq}$.

En particulier, l'étape d'enregistrement des hologrammes $h_{pq}$ peut prendre en compte les résultats de l'étape 180 de détermination, pour chaque distribution de points d'émission $EPD_{uv}^{ij}$, de la direction du vecteur d'onde $\vec{k}_{uv}^{ij}$ de l'onde lumineuse résultante émise par les points d'émission $EP_{pq}^{ij}$ de la distribution de points d'émission $EPD_{uv}^{ij}$.

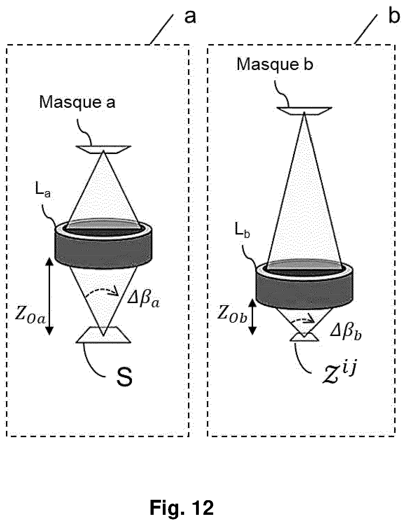

L'enregistrement des hologrammes est basé sur l'interférence de deux groupes de faisceaux lumineux sur le film holographique. Les franges d'interférence générées sont mémorisées physiquement ou chimiquement sur le film holographique entraînant une variation de l'indice de réfraction. Les deux groupes de faisceaux sont classiquement dénommés 'faisceaux de référence' et 'faisceaux objet'. Pour l'encodage des hologrammes $h_{pq}$ d'une distribution de points d'émission $EPD_{uv}$ (ou $EPD_{uv}^{ij}$ ), les faisceaux de référence correspondent aux ondes lumineuses extraites des réseaux diffraction $r_{pq}$ couplés optiquement aux guides d'ondes $g_p$ et aux électrodes $e_p$ sélectionnés pour former les points d'émission $EP_{pq}$ (ou $EP_{pq}^{ij}$ ) de la distribution $EPD_{uv}$ (ou $EPD_{uv}^{ij}$ ). L'étape d'enregistrement des hologrammes nécessite un système optique d'enregistrement consistant en la formation des faisceaux objet ayant un angle d'encodage $\beta$ avec la surface d'émission S (ou spécifiquement la zone d'émission élémentaire $\mathcal{Z}^{ij}$ ). L'angle d'encodage $\beta$ induit alors la direction du vecteur d'onde $\vec{k}_{uv}$ (ou $\vec{k}_{uv}^{ij}$ ). Les faisceaux objet, issus d'une source lumineuse cohérente non représentée sur les figures, sont obtenus à partir de la projection d'un masque donné à travers une lentille de convergence (L$_a$ ou L$_b$), tel que représenté sur la figure 12. Avantageusement, pour chaque distribution de points d'émission $EPD_{uv}$ (ou $EPD_{uv}^{ij}$ ), différentes zones de la surface d'émission S (ou spécifiquement la zone d'émission élémentaire $\mathcal{Z}^{ij}$ ) sont exposées séquentiellement à différents faisceaux objets d'angle d'encodage $\beta$ spécifique, de façon à former des points d'émission associés à des directions d'émission distinctes.

La discrétisation de la surface d'émission S selon les modes de réalisation de l'invention permet notamment de faciliter et d'accélérer l'étape d'enregistrement des hologrammes au cours de la phase de fabrication matérielle du dispositif 10 par rapport à une surface S non discrétisée. En effet, les points d'émission $EP_{pq}^{ij}$ d'une même distribution de points d'émission $EPD_{uv}^{ij}$ étant contenus dans une unique zone d'émission élémentaire $\mathcal{Z}^{ij}$ de taille inférieure à la taille globale de la surface d'émission S, l'enregistrement (ou encodage) de la direction du vecteur d'onde $\vec{k}_{uv}^{ij}$ dans les hologrammes associés aux points d'émission $EP_{pq}^{ij}$ permet de coder des angles sur des valeurs plus importantes. Tel que représenté par les systèmes optique d'enregistrement d'hologrammes sur la figure 12, l'encodage d'une zone ( $\mathcal{Z}^{ij}$ sur la figure 12b) plus petite qu'une surface (S sur la figure 12a), induit une augmentation du cône de l'angle d'encodage $\Delta\beta$. Cette diminution de la zone d'encodage induit également une diminution des contraintes sur la cohérence temporelle de la source lumineuse de génération des faisceaux objet.

Les figures 1, 2 et 4 montrent des ensembles de guides d'ondes $g_p$ et d'électrodes $e_q$ de configurations rectilignes selon l'axe X et l'axe Y respectivement, chaque guide d'onde $g_p$ étant disposés perpendiculairement aux électrodes $e_q$ pour obtenir des points d'émission $EP_{pq}$ régulièrement répartis selon un quadrillage périodique spatialement sur la surface d'émission S.

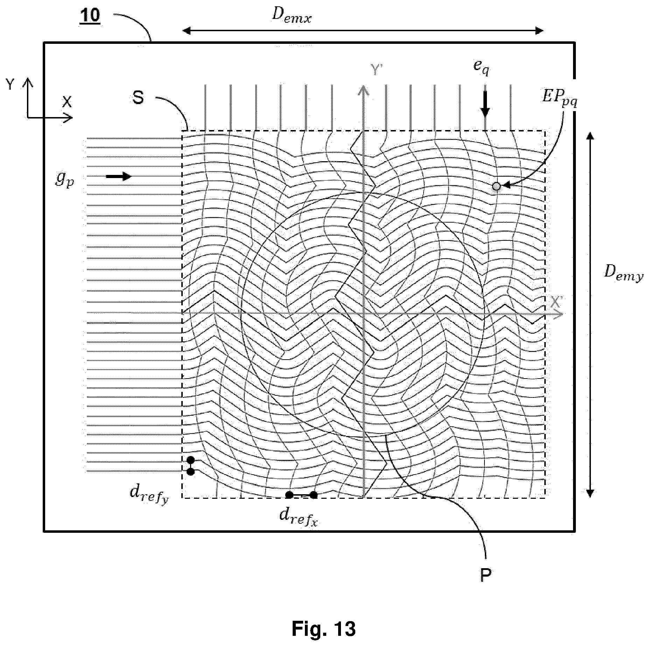

En variante, l'ensemble de $M_x$ guides d'ondes $g_p$ du dispositif de projection d'une image 10 peut être agencé selon une configuration d'isolignes non rectilignes dans le plan défini par la surface d'émission S, comme représenté sur la figure 13.

Tel qu'utilisée ici, l'expression de « isolignes non rectilignes » fait référence à un ensemble d'au moins deux courbes géométriques f1(X,Y) et f2(X,Y), définies dans un plan (X,Y), telles que la distance entre un point p1 appartenant à la courbe géométrique f1(X,Y) et la courbe géométrique f2(X,Y) est la même quel que soit le point p1, ladite distance étant définie par la longueur du chemin le plus court entre le point p1 et un point de la courbe géométrique f2(XY) selon une métrique de référence $d_{ref}$. Inversement, la distance entre un point p2 appartenant à la courbe géométrique f2(X,Y) et la courbe géométrique f1(X,Y) est la même quel que soit le point p2, ladite distance étant défini par la longueur du chemin le plus court entre le point p2 et un point de la courbe géométrique f1(XY) selon la métrique de référence $d_{ref}$. Ainsi, des isolignes non rectilignes correspondent à un ensemble de courbes géométriques, telles que les courbes de l'ensemble sont toujours séparées deux-à-deux d'une distance constante. De telles courbes géométriques peuvent être des courbes paramétriques définies dans le plan de la surface d'émission S. Pour une courbe géométrique donnée, une isoligne associée peut prendre une allure de courbe géométrique très variable en fonction de la valeur de la métrique $d_{ref}$ considérée.

Avantageusement, la configuration des électrodes sur la surface d'émission S peut être similaire à la configuration des guides d'ondes. Ainsi, comme représenté sur la figure 13, l'ensemble de $M_y$ électrodes $e_q$ du dispositif de projection d'image 10 peut être agencé selon une configuration d'isolignes non rectilignes dans le plan (X,Y) défini par la surface d'émission S.

Dans le cas où la configuration de guides d'ondes isolignes dans le plan (X,Y) est définie selon une valeur de métrique de référence $d_{ref_y}$ constante entre chacun des guides d'onde $g_p$, la configuration peut être une configuration de guides d'ondes isolignes dites régulières. De la même manière, dans le cas où la configuration de d'électrodes isolignes dans le plan (X,Y) est définie selon une valeur de métrique de référence $d_{ref_x}$ constante entre chacune des électrodes $e_q$, la configuration peut être une configuration d'électrodes isolignes dites régulières.

Les valeurs de métrique de référence $d_{ref_y}$ et $d_{ref_x}$ peuvent être variables entre différents guides d'onde $g_p$ et différents électrodes $e_q$ respectivement. Les variabilités de valeurs de métrique de référence permettent notamment d'améliorer la suppression des effets de diffraction liés à d'éventuelles périodicités générées dans les configurations de guides d'onde et d'électrodes.

Avantageusement, la configuration de guides d'ondes isolignes et/ou la configuration d'électrodes isolignes peut être mise en œuvre en utilisant une méthode de type « marche rapide » (ou FMM, *Fast-Marching Method* selon l'expression anglo-saxonne correspondante) ou de type « lignes de niveau » (ou LSM, *Level-Set Method* selon l'expression anglo-saxonne correspondante).

Il est à noter que les méthodes FMM et LSM (James Sethian, Level Set Methods and Fast Marching Methods Evolving Interfaces in Computational Geometry, Fluid Mechanics, Computer Vision and Materials Science, Cambridge University Press, 1999) sont des algorithmes numériques permettant de résoudre les problèmes aux limites de l'équation Eikonal de manière à suivre l'évolution d'interfaces.

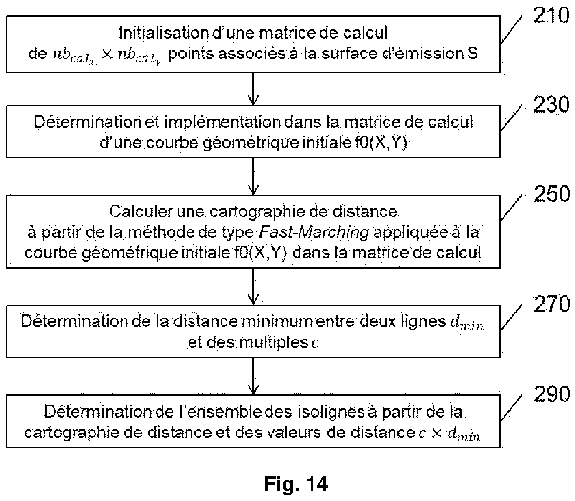

La figure 14 est un organigramme représentant des étapes de la phase de conception du procédé pour la fabrication du dispositif 10 et mises en œuvre pour générer des configurations de l'ensemble de guides d'ondes $g_p$ et/ou de l'ensemble d'électrodes $e_q$ sur la surface d'émission S, selon des modes de réalisation de l'invention.

A l'étape 210, une matrice de calcul est initialisée. La matrice de calcul correspond à la surface d'émission S la taille $D_{emx}$ et $D_{emy}$, et est caractérisée selon des pas de calcul $d_{cal_x}$ et $d_{cal_y}$ prédéterminés. La matrice de calcul initialisée peut alors être une matrice comprenant un nombre $nb_{cal_x} \times nb_{cal_y}$ de points définis selon les équations (23) et (24) suivantes :

$$nb_{cal_x} = \left\lfloor \frac{D_{emx}}{d_{cal_x}} \right\rfloor + 1 \quad (23)$$

$$nb_{cal_y} = \left\lfloor \frac{D_{emx}}{d_{cal_y}} \right\rfloor + 1 \quad (24)$$

Les pas de calculs peuvent être définis par exemple en fonction de la largeur ($g_y$) des guides d'ondes $g_p$ et de la largeur ($e_x$) des électrodes $e_q$, et/ou en fonction des valeurs de métrique de référence $d_{ref_y}$ et $d_{ref_x}$ des guides d'onde $g_p$ et des électrodes $e_q$. En particulier, les pas de calculs peuvent être définis de manière à minimiser le temps nécessaire pour générer ces configurations tout en optimisant la résolution de calculs. Par exemple et sans limitation, les pas de calcul $d_{cal_x}$ et $d_{cal_y}$ peuvent être égaux à une même grandeur $d_{cal}$ comprise entre 1.5 μm et 250 nm.

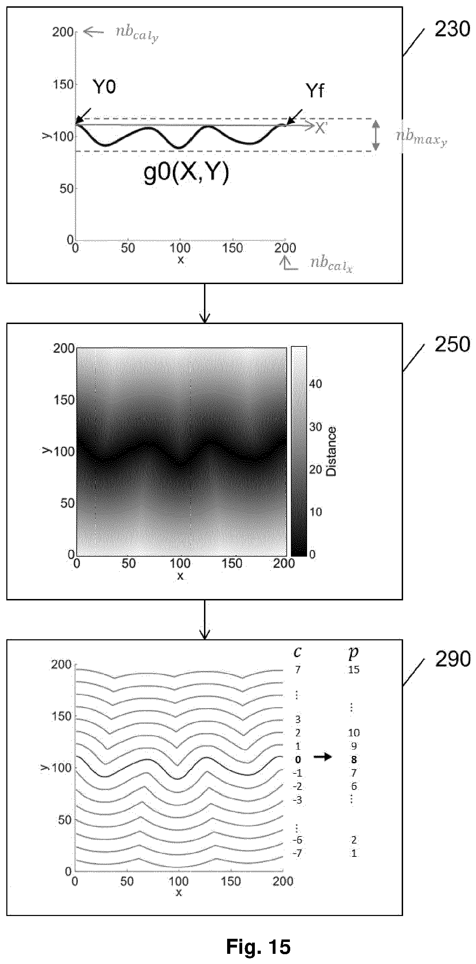

A l'étape 230, pour la configuration de guides d'ondes isolignes, une courbe géométrique initiale de guide d'onde g0(X,Y) est déterminée et implémentée dans la matrice de calcul initialisée, comme illustré par l'exemple d'implémentation de la figure 15 (i.e. étape 230). De manière équivalente, à l'étape 230, pour la configuration d'électrodes isolignes, une courbe géométrique initiale d'électrode e0(X,Y) peut être déterminée et implémentée dans la matrice de calcul initialisée.

La courbe géométrique initiale de guide d'onde et/ou d'électrode f0(X,Y), encore appelée 'courbe géométrique initiale', a une pluralité de caractéristiques de construction. Par exemple et sans limitations, des caractéristiques de construction peuvent comprendre:

- une courbe géométrique initiale f0(X,Y) définie par une fonction géométrique non rectiligne et s'étendant de part et d'autre de la surface d'émission S, à partir d'une position initiale (X0,Y0) vers une position finale (Xf,Yf) dans la matrice de calcul initialisée, la position initiale et la position finale étant disposées suivant un axe d'extension X' ou Y', sensiblement parallèle à l'axe X ou Y ; en particulier, comme illustré sur la figure 15 (i.e. étape 230), la courbe géométrique initiale de guide d'onde g0(X,Y) peut être définie à partir d'une position initiale (0,Y0) vers une position finale ($nb_{car_x}$,Yf) ; de la même manière, la courbe géométrique initiale d'électrode e0(X,Y) peut être définie à partir d'une position initiale (X0, 0) vers une position finale (Xf, $nb_{cal_y}$) ;
- une courbe géométrique initiale f0(X,Y) comprenant uniquement des points ordinaires dit 'points réguliers' pour lesquels les dérivées partielles de la courbe selon X et Y ne sont pas simultanément nulles, c'est-à-dire dans ce cas que la courbe géométrique initiale f0(X,Y) ne comprend aucun point stationnaire dit 'point singulier' pour lequel les dérivées partielles de la courbe selon X et Y en ce point sont nulles, la tangente en un tel point apparaissant alors indéterminée ; en particulier, la courbe géométrique initiale f0(X,Y) ne comprend alors aucun point dit 'point double' pour lequel la courbe "repasse" sur elle-même (ou se croise) dans le plan (X,Y), ni aucun point dit 'point de rebroussement' pour lequel la courbe "rebrousse chemin" dans le plan (X,Y) ;

- une courbe géométrique initiale f0(X,Y) comprenant en tout point dans le plan (X,Y) un rayon de courbure supérieur ou égal à un rayon de courbure minimum $rc$ prédéfini. En particulier, un rayon de courbure minimum $rc_y$ associé aux guides d'ondes $g_p$ peut être défini en fonction des propriétés physiques des guides d'ondes $g_p$ , et/ou de leurs contraintes de fabrication respectives. Par exemple et sans limitation, le rayon de courbure minimum $rc_y$ associé aux guides d'ondes $g_p$ peut être égale à 20 $\mu$m ;

- une courbe géométrique initiale f0(X,Y) contenue dans une zone prédéterminée de la matrice de calcul initialisée ; par exemple et sans limitation, une zone dite « zone de contenu » peut être déterminée en fonction d'un nombre de points $nb_{max_x}$ ou $nb_{max_y}$ définis par rapport à la position initiale (X0,Y0) et/ou à la position finale (Xf,Yf) de la courbe.

Avantageusement, la courbe géométrique initiale f0(X,Y) peut être définie de manière aléatoire en respectant une ou plusieurs des caractéristiques de construction précédentes.

La courbe géométrique initiale f0(X,Y) peut par exemple être constituée d'une succession de segments. En particulier, la courbe géométrique initiale f0(X,Y) peut comprendre des segments inclinés selon un angle d'inclinaison $\beta(X,Y)$ par rapport à l'axe d'extension X' ou Y' sensiblement parallèle à l'axe X ou Y. L'angle d'inclinaison $\beta(X,Y)$ peut correspondre à une grandeur constante $\beta$ ou à une fonction variable dans le plan (X,Y), par exemple croissante, décroissante ou quelconque, et définie aléatoirement, pseudo-aléatoirement et/ou en fonction des caractéristiques de construction. Le long de l'axe d'extension X' ou Y', l'angle d'inclinaison $\beta(X, Y)$ peut être positif ou négatif. Par exemple, d'angle d'inclinaison peut être constant $\beta$, et alternativement positif et négatif. La taille de chaque segment incliné peut être déterminée aléatoirement, pseudo-aléatoirement et/ou en fonction des caractéristiques de construction. Les segments de la courbe géométrique initiale f0(X,Y) peuvent alors être reliés entre eux par des segments courbes de rayon de courbure supérieur ou égal au rayon de courbure minimum.

Les positions initiales (0,Y0) et (X0,0), et/ou similairement la « zone de contenu » de la courbe géométrique initiale, peuvent être définies aléatoirement, pseudo-aléatoirement et/ou définies par exemple de manière à être centrées dans la matrice de calcul initialisée respectivement selon l'axe Y et l'axe X.

A l'étape 250, une fonction de distance peut être appliquée à courbe géométrique initiale f0(X,Y) pour générer la configuration de guides d'ondes isolignes et/ou la configuration d'électrodes isolignes. Une telle fonction de distance correspond à une succession d'étapes permettant d'appliquer une ou plusieurs valeurs de métrique de référence $d_{ref}$ entre différentes courbes formant une configuration d'isolignes non rectilignes, à partir de la courbe géométrique initiale f0(X,Y). Par exemple et sans limitation, une fonction de distance utilisée à l'étape 250 peut être la méthode de type *Fast-Marching*.

A titre d'illustration, à l'étape 250 pour la configuration de guides d'ondes isolignes, une cartographie de distance (ou *distance map* selon l'expression anglo-saxonne correspondante) peut être calculée à partir de la méthode de type *Fast-Marching* (ou *Level-Set*) appliquée à la courbe géométrique initiale f0(X,Y) dans la matrice de calcul. Pour chacun des $nb_{cal_x} \times nb_{cal_y}$ points de la matrice de calcul, la métrique isotrope arbitraire de distance est alors calculée par rapport au point le plus proche de la courbe géométrique initiale f0(X,Y) implémentée dans la matrice de calcul.

La figure 15 (i.e. étape 250) illustre le résultat du calcul d'une cartographie de distance pour chaque point de la matrice par rapport à une courbe géométrique initiale de guide d'onde g0(X,Y) déterminée à l'étape 230 précédente.

A l'étape 270, la valeur d'une distance minimale $d_{min}$ peut être déterminée.

En particulier, dans le cas de la détermination de la configuration de guides d'ondes isolignes, la distance minimale $d_{min}$ correspond à la distance d'écartement $d_{min-p}$ constante et fixée entre deux guides d'ondes $g_p$ sur la surface d'émission S. La valeur de $d_{min-p}$ peut être définie par rapport à la largeur $(g_y)$ des guides d'ondes $g_p$, par exemple selon l'expression (25) suivante :

$$d_{min-p} = 3 \times g_y \qquad (25)$$

Dans le cas de la détermination de la configuration d'électrodes isolignes la distance minimale $d_{min}$ correspond à la distance d'écartement $d_{min-q}$ constante et fixée entre électrodes $e_q$ sur la surface d'émission S. La valeur de $d_{min-q}$ peut être définie par rapport à la largeur $(e_x)$ des électrodes $e_q$, par exemple selon l'expression (26) suivante :

$$d_{min-q} = 1{,}2 \times e_x \qquad (26)$$

A l'étape 270 également, un ou plusieurs multiples *c* de la valeur de la distance minimale $d_{min}$ peuvent être déterminés. La détermination de ces multiples peut dépendre notamment de la taille $D_{emx}$ et $D_{emy}$ de la surface d'émission S, et de la position initiale (X0,Y0) de la courbe géométrique initiale f0(X,Y).

Par exemple et sans limitation, dans le cas où la position initiale (0,Y0) est fixée de manière à être centrée dans la matrice de calcul initialisée respectivement selon l'axe Y, les multiples $c \times d_{min}$ peuvent être déterminés pour les indices *c* d'intervalle défini selon l'expression (27) suivante :

$$c = \left[1; \left\lfloor \left| \frac{D_{emy}}{2 \times d_{min-q}} \right| \right\rfloor \right] \quad (27)$$

A l'étape 290, l'ensemble des isolignes (appelés également chemins d'isolignes) d'une configuration peuvent être déterminées à partir de la cartographie de distance et en fonction des multiples *c* de la valeur de la distance minimale $d_{min}$. En particulier, pour chaque ordre *c*, une isoligne associée à la courbe géométrique initiale f0(X,Y) implémentée correspond à la position des points de la matrice de calcul associée à la valeur la plus proche de la distance $c \times d_{min}$. Ainsi, à l'étape 290, la configuration de guides d'ondes et/ou ladite configuration d'électrodes sont déterminées.

La figure 15 (i.e. étape 290) illustre le résultat d'un ensemble des isolignes associé à la courbe géométrique initiale de guide d'onde g0(X,Y) correspondant à l'isoligne d'ordre *c* = 0. L'ensemble des isolignes déterminé peut ainsi être obtenu pour les isolignes définies à partir des ordres *c* = [-7; -1] et *c* = [1; 7]. Dans cet exemple, chaque guide d'onde $g_p$ d'ordre *p* correspond alors à une isoligne d'ordre *c*.

Les étapes de génération des configurations de l'ensemble de guides d'ondes $g_p$ et de l'ensemble d'électrodes $e_q$ sur la surface d'émission S de la phase de conception du procédé pour la fabrication du dispositif de projection d'une image 10 permet en particulier de minimiser les dégradations de l'image projetée liées à des périodicités spatiales entre les points d'émission $EP_{pq}$ et d'optimiser le nombre de points d'émission $EP_{pq}$ sur la surface d'émission S pour maximiser la résolution de l'image formée sur la rétine R, pour obtenir par exemple un contraste optimisé.

En particulier, l'implémentation de méthodes de type *Fast-Marching* (ou *Level-Set*) pour calculer les cartographies de distance à l'étape 250 permet de favoriser une répartition apériodique des intersections entre les guides d'ondes $g_p$ et les électrodes $e_q$, et donc la répartition apériodique des différents point d'émission $EP_{pq}$, ce qui induit une amélioration de la qualité des images.

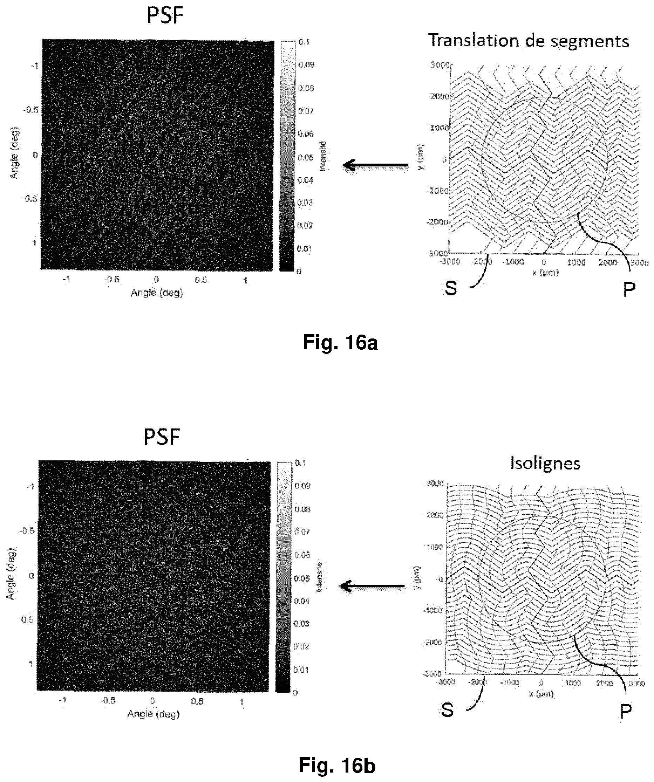

La figure 16a représente le résultat d'une simulation de la distribution spatiale de l'intensité de la réponse percussionnelle (i.e. PSF) sur la rétine R formée par des points d'illumination associés à des distributions de points d'émission sur la surface d'émission S définies à partir de configurations de guides d'ondes et d'électrodes obtenues par translation d'une courbe segmentés selon l'axe Y et l'axe X respectivement. Ces configurations sont appelées configurations par « translations de segments » par la suite. Bien que de telles configurations améliorent l'apériodicité de la répartition des différents points d'émission $EP_{pq}$ par rapport à des configurations rectilignes, de telles configurations ne permettent pas d'éviter des effets de diffraction lors de la formation de l'image sur la rétine R puisque, comme illustré sur la simulation sur figure 16a, l'intensité la réponse percussionnelle présente des lignes dans le bruit généré par l'alignement de certains points d'émission $EP_{pq}$.

Inversement, la figure 16b représente le résultat d'une simulation de la distribution spatiale de l'intensité la réponse percussionnelle (i.e. PSF) sur la rétine R formée par des points d'illumination associés à des distributions de points d'émission sur la surface d'émission S définies à partir de configurations de guides d'ondes et d'électrodes isolignes. Comme illustré sur la figure 16b, de telles configurations permettent limiter les effets de diffraction lors de la formation de l'image sur la rétine R et ainsi d'obtenir un bruit plus uniforme.

Par ailleurs, le calcul du nombre d'intersections entre les guides d'ondes $g_p$ et les électrodes $e_q$, et donc de points d'émission $EP_{pq}$, pour une surface d'émission S associée à des configurations de guides d'ondes et d'électrodes isolignes augmente (notamment de plus de 14%) par rapport à une surface d'émission S associée à des configurations de guides d'ondes et d'électrodes par « translations de segments », chaque surface d'émission S comprenant dans ce cas, les mêmes nombres $M_x$ de guides d'ondes $g_p$ et $M_y$ d'électrodes $e_q$. Cette augmentation significative de points d'émission $EP_{pq}$ induit une augmentation de la densité et donc une augmentation du nombre possible de pixels de l'image à projeter et/ou une augmentation de l'intensité des points illuminés sur la rétine R, tout en améliorant la répartition apériodique des différents point d'émission $EP_{pq}$.

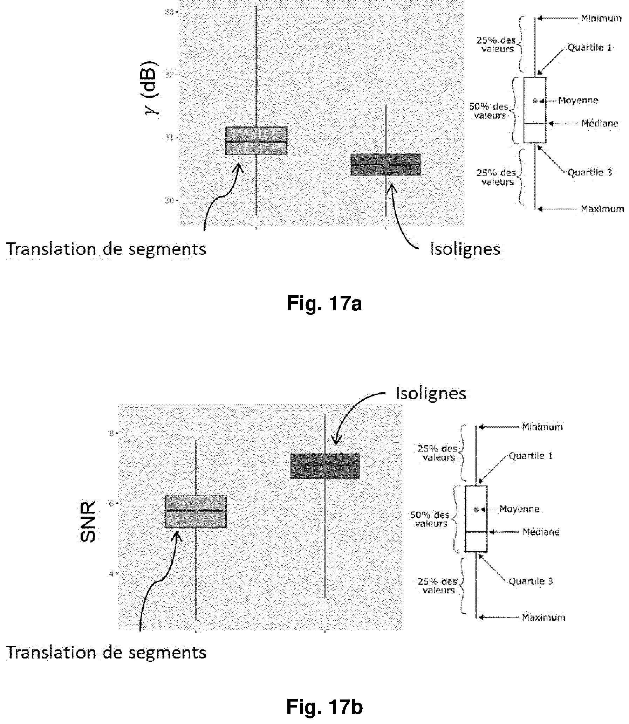

Les figures 17a et 17b représentent les résultats de la comparaison de critères de quantification de la qualité de l'image générés à partir de deux surfaces d'émission S distinctes associées chacune un tirage aléatoire d'un nombre de 25000 points d'émission $EP_{pq}$. La première surface d'émission S est associée à des configurations de guides d'ondes et d'électrodes par « translations de segments », et la seconde surface d'émission S est associée à des configurations de guides d'ondes et d'électrodes isolignes.

En particulier, la figure 17a représente les résultats de la comparaison des ratios de puissance $\gamma$ pour chacune

des surfaces d'émission S distinctes. Comme illustré, l'implémentation d'isolignes permet de diminuer le ratio de puissance $\gamma$ par rapport à des configurations par « translations de segments », ce qui signifie que cela induit une diminution de la puissance du bruit d'intensité formé par la distribution de points d'émission par rapport à la puissance du pic central d'intensité et ainsi une amélioration de la qualité de l'image projetée.

La figure 17b représente les résultats de la comparaison des rapports signal sur bruit (ou SNR pour *Signal-to-Noise Ratio* selon l'expression anglo-saxonne correspondante) pour chacune des surfaces d'émission S distinctes. Il est à noter que le critère SNR, tout comme le ratio de puissance $\gamma$, permet de quantifier l'efficacité de l'auto-focalisation d'une distribution de points d'émission $EPD_{uv}$ à un point $R_{uv}$ sur la rétine R de l'œil. Comme illustré sur la figure 8a, le critère SNR peut être évalué à partir de la différence entre la hauteur du pic central d'intensité formé par la distribution de points d'émission et la hauteur du pic dit 'pic secondaire'. Comme montré sur la figure 17b, l'implémentation d'isolignes permet d'augmenter le rapport signal sur bruit par rapport à des configurations par « translations de segments », ce qui signifie également une amélioration de la qualité de l'image projetée.

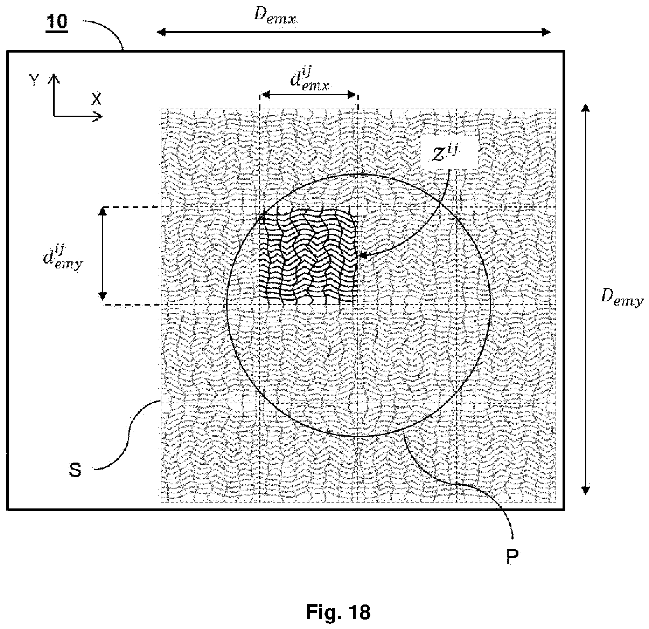

Selon certains modes de réalisation, la surface d'émission S peut être discrétisée en $(L_x \times L_y)$ zones d'émission élémentaires $\mathcal{Z}^{ij}$ dans le plan (X,Y), comme illustré par la figure 18. Chaque zone d'émission élémentaire $\mathcal{Z}^{ij}$ peut être associée à un nombre $m_x^{ij}$ de guides d'ondes $g_p^{ij}$ et à un nombre $m_y^{ij}$ d'électrodes $e_q^{ij}$, de manière à générer un sous-ensemble de $\left(m_x^{ij} \times m_y^{ij}\right)$ points d'émission $EP_{pq}^{ij}$ définis parmi les $(M_x \times M_y)$ points d'émission $EP_{pq}$ de la surface d'émission S. Chaque zone d'émission élémentaire $\mathcal{Z}^{ij}$ peut alors être associée à un nombre fini de distributions de points d'émission $EPD_{uv}^{ij}$. Chaque distribution de points d'émission $EPD_{uv}^{ij}$ d'une zone d'émission élémentaire $\mathcal{Z}^{ij}$ est alors constituée d'un ou plusieurs points d'émission $EP_{pq}^{ij}$ déterminés uniquement parmi les $\left(m_x^{ij} \times m_y^{ij}\right)$ points d'émission $EP_{pq}^{ij}$ de la zone d'émission élémentaire $\mathcal{Z}^{ij}$. Pour chaque zone d'émission élémentaire $\mathcal{Z}^{ij}$, le sous-ensemble de $m_x^{ij}$ guides d'ondes $g_p^{ij}$ peut être agencé selon une sous-configuration de guides d'ondes isolignes non rectilignes, et le sous-ensemble de $m_y^{ij}$ électrodes $e_q^{ij}$ peut être agencé selon une sous-configuration d'électrodes isolignes non rectilignes.

Avantageusement, pour chaque zone d'émission élémentaire $\mathcal{Z}^{ij}$, la sous-configuration de guides d'ondes isolignes et/ou la sous-configuration d'électrodes isolignes peuvent être générées à partir de l'application de la méthode de type *Fast-Marching* (ou *Level-Set*) comme décrit notamment par les étapes de la phase de conception pour la génération des configurations.

Par exemple et sans limitation, pour une zone d'émission élémentaire $\mathcal{Z}^{ij}$, une sous-configuration d'isolignes non rectiligne peut être formée à partir d'une courbe géométrique initiale s'étendant dans le plan de la surface d'émission S de part et d'autre de la zone d'émission élémentaire $\mathcal{Z}^{ij}$, à partir d'une position initiale intermédiaire vers une position finale intermédiaire disposées suivant un axe d'extension X' ou Y' sensiblement parallèle à l'axe X ou à l'axe Y.

Dans les modes de réalisation précédemment décrits, chaque point d'émission $EP_{pq}$ est formé à partir d'un hologramme $h_{pq}$ inscrit dans un film holographique H et illuminé par une lumière extraite d'un guide de lumière $g_p$. Dans ces cas, chaque hologramme $h_{pq}$ permet le contrôle de la phase et le contrôle de l'angle de l'onde lumineuse extraite au niveau du réseau de diffraction $r_{pq}$. D'autres alternatives pour former (ou configurer) l'ensemble d'éléments d'orientations et donc les points d'émissions peuvent être envisagées.

En particulier, la quatrième couche (i.e. le film holographique H) peut être remplacée par un modulateur de lumière spatial (ou SLM pour *Spatial Light Modulator* selon l'expression anglo-saxonne correspondante) disposé en vis-à-vis du réseau de diffraction. Un SLM localisé au niveau d'un point d'émission peut être formé par des cristaux liquides par exemple. Le SLM peut alors être configuré (c'est-à-dire fabriqué) pour contrôler la phase de l'onde lumineuse extraite au niveau du réseau de diffraction $r_{pq}$. Dans ce cas, chaque réseau de diffraction $r_{pq}$ peut être configuré (c'est-à-dire fabriqué) pour contrôler l'angle de l'onde lumineuse en plus de l'extraction de l'onde lumineuse. En variante, la quatrième couche peut comprendre en plus un film holographique hologramme $h_{pq}$ configuré (c'est-à-dire fabriqué) pour contrôler uniquement l'angle de l'onde lumineuse.

Il convient de noter que certaines caractéristiques de l'invention peuvent présenter des avantages lorsqu'elles sont considérées séparément.

L'homme du métier comprendra aisément que certaines étapes et sous-étapes de procédé décrites précédemment peuvent être réalisées de manière simultanée et/ou selon un ordre différent, par exemple selon un ordre défini à partir des caractéristiques du dispositif de projection d'une image 10.

Le dispositif et les procédés décris précédemment selon les modes de réalisation de l'invention ou des sous éléments de ce système peuvent être mis en œuvre de diverses manières par matériel (« hardware »), logiciel, ou une combinaison de matériel et de logiciels, notamment sous la forme de code de programme pouvant être distribué sous la forme d'un produit de programme, sous diverses formes.

L'invention n'est pas limitée aux modes de réalisation décrits ci-avant à titre d'exemple non limitatif. Elle englobe toutes les variantes de réalisation qui pourront être envisagées par l'homme du métier. En particulier, l'homme du métier comprendra que l'invention n'est pas limitée aux différentes zones d'émission élémentaires et aux différentes configurations d'isolignes du dispositif de projection d'une image décrites à titre d'exemple non limitatif. En particulier, certains modes de réalisation de l'invention peuvent être combinés.

## Revendications

1. Procédé pour la fabrication d'un dispositif de projection d'une image (10) sur un œil, le dispositif étant défini dans un repère orthogonal (X,Y,Z) et comprenant une surface d'émission S s'étendant généralement dans le plan (X,Y) dudit repère orthogonal (X,Y,Z), la surface d'émission S comprenant un empilement d'éléments, lesdits éléments comprenant un ensemble de $M_x$ guides d'ondes $g_p$, un ensemble de $M_x \times M_y$ réseaux de diffraction $r_{pq}$ et un ensemble de $M_y$ électrodes $e_q$, $M_x$ et $M_y$ étant des entiers positifs dont le produit $M_x \times M_y$ est strictement supérieur à 1, chaque réseau de diffraction $r_{qp}$ étant positionné à l'intersection d'un desdits guides d'ondes $g_p$ et d'une desdites électrodes $e_p$ de manière à former un point d'émission $EP_{pq}$ d'une onde lumineuse, ledit ensemble de $M_x$ guides d'ondes $g_p$ étant agencé selon une configuration de guides d'ondes, et ledit ensemble de $M_y$ électrodes $e_q$ étant agencé selon une configuration d'électrodes,
le procédé comprenant une phase de conception dudit dispositif (10) et une phase de fabrication matérielle dudit dispositif (10) ainsi conçu, **caractérisé en ce que** ladite phase de conception comprend une étape consistant à déterminer (290) ladite configuration de guides d'ondes ou ladite configuration d'électrodes, ladite configuration déterminée étant une configuration d'isolignes non rectilignes définie dans le plan (X,Y) défini par la surface d'émission S et générant une répartition apériodique des $M_x \times M_y$ points d'émission $EP_{pq}$.

2. Procédé pour la fabrication d'un dispositif de projection d'une image (10) selon la revendication 1, dans lequel l'étape de détermination de configuration (290) consiste à déterminer ladite configuration de guides d'ondes et ladite configuration d'électrodes, lesdites configurations déterminées étant des configurations d'isolignes non rectilignes définies dans le plan (X,Y) défini par la surface d'émission S et générant une répartition apériodique des $M_x \times M_y$ points d'émission $EP_{pq}$.

3. Procédé pour la fabrication d'un dispositif de projection d'une image (10) selon l'une des revendications 1 ou 2, dans lequel ladite phase de conception comprend l'étape consistant à déterminer (230) une courbe géométrique initiale s'étendant de part et d'autre de ladite surface d'émission S selon un axe d'extension parallèle à l'axe X et/ou à l'axe Y dudit repère orthogonal (X,Y,Z), ladite courbe géométrique initiale étant définie aléatoirement en respectant au moins une caractéristique de construction de courbe.

4. Procédé pour la fabrication d'un dispositif de projection d'une image (10) selon la revendication 3, dans lequel ladite courbe géométrique initiale est constituée d'une succession de segments.

5. Procédé pour la fabrication d'un dispositif de projection d'une image (10) selon l'une des revendications 3 ou 4, dans lequel ladite phase de conception comprend l'étape consistant à appliquer (250) une fonction de distance à ladite courbe géométrique initiale pour générer la configuration de guides d'ondes isolignes et/ou la configuration d'électrodes isolignes.

6. Procédé pour la fabrication d'un dispositif de projection d'une image (10) selon la revendication 5, dans lequel ladite fonction de distance est déterminée par une méthode de type *Fast-Marching*.

7. Procédé pour la fabrication d'un dispositif de projection d'une image (10) selon l'une des revendications 3 à 6, dans lequel ladite courbe géométrique initiale comprend uniquement des points ordinaires dits 'points réguliers' pour lesquels les dérivées partielles de ladite courbe selon X et Y ne sont pas simultanément nulles.

8. Procédé pour la fabrication d'un dispositif de projection d'une image (10) selon l'une des revendications 3 à 7, dans lequel ladite courbe géométrique initiale comprend en tout point de ladite courbe, dans le plan (X,Y), un rayon de courbure supérieur ou égale à un rayon de courbure minimum prédéfini.

9. Procédé pour la fabrication d'un dispositif de projection d'une image (10) selon la revendication 8, dans lequel ledit rayon de courbure minimum est défini en fonction des propriétés physiques des guides d'ondes $g_p$ et/ou des électrodes $e_q$, et/ou des contraintes de fabrication desdits guides d'ondes ou desdites électrodes.

10. Procédé pour la fabrication d'un dispositif de projection d'une image (10) selon l'une des revendications précédentes, dans lequel ladite phase de conception comprend l'étape consistant à discrétiser (120) ladite surface d'émission S en $L_x \times L_y$ de zones d'émission élémentaires $\mathcal{Z}^{ij}$ selon un maillage continu dans le plan (X,Y), chaque zone d'émission élémentaire $\mathcal{Z}^{ij}$ comprenant un sous-ensemble de $m_x^{ij} \times m_y^{ij}$ de points d'émission $EP_{pq}^{ij}$, ladite étape consistant à déterminer (290) ladite configuration de guides d'ondes et/ou ladite configuration d'électrodes étant appliquée à chaque zone d'émission élémentaire $\mathcal{Z}^{ij}$ de sorte à former une sous-configuration de guides d'ondes isolignes non rectilignes et/ou une sous-configuration d'électrodes isolignes non rectilignes.

11. Procédé pour la fabrication d'un dispositif de projection d'une image (10) selon la revendication 10, dans lequel ladite sous-configuration de guides d'ondes isolignes non rectilignes et/ou ladite sous-configuration d'électrodes isolignes non rectilignes sont générées en appliquant une méthode de type *Fast-Marching* à une courbe géométrique initiale s'étendant dans le plan de la surface d'émission S de part et d'autre de la zone d'émission élémentaire $\mathcal{Z}^{ij}$ selon un axe d'extension parallèle à l'axe X et/ou à l'axe Y.

12. Dispositif de projection d'une image (10) sur un œil, le dispositif étant fabriqué à partir du procédé défini selon l'une quelconque des revendications 1 à 8 précédentes, ledit dispositif étant défini dans un repère orthogonal (X,Y,Z) et comprenant une surface d'émission S s'étendant généralement dans le plan (X,Y) dudit repère orthogonal (X,Y,Z), la surface d'émission S comprenant un empilement d'éléments, lesdits éléments comprenant un ensemble de $M_x$ guides d'ondes $g_p$, un ensemble de $M_x \times M_y$ réseaux de diffraction $r_{pq}$ et un ensemble de $M_y$ électrodes $e_q$, les nombres $M_x$ et $M_y$ étant des entiers strictement supérieurs à 1, chaque réseau de diffraction $r_{qp}$ étant positionné à l'intersection d'un desdits guides d'ondes $g_p$ et d'une desdites électrodes $e_p$ de manière à former un point d'émission $EP_{pq}$ d'une onde lumineuse, ledit ensemble de $M_x$ guides d'ondes $g_p$ étant agencé selon une configuration de guides d'ondes, et ledit ensemble de $M_y$ électrodes $e_q$ est agencé selon une configuration d'électrodes, ladite configuration de guides d'ondes ou ladite configuration d'électrodes étant une configuration d'isolignes non rectilignes définie dans le plan (X,Y) défini par la surface d'émission S et générant une répartition apériodique des $(M_x \times M_y)$ points d'émission $EP_{pq}$.

13. Système optique portable d'affichage de données transparent comprenant un dispositif de projection d'une image (10) selon la revendication précédente, dans lequel ledit système est un système de lunettes ou un casque à réalité augmentée.

**Patentansprüche**

1. Verfahren zur Herstellung einer Vorrichtung zum Projizieren eines Bildes (10) auf ein Auge, wobei die Vorrichtung in einem orthogonalen Koordinatensystem (X, Y, Z) definiert ist und umfassend eine Emissionsoberfläche S, die sich im Allgemeinen in der Ebene (X, Y) des orthogonalen Koordinatensystems (X, Y, Z) erstreckt, wobei die Emissionsoberfläche S einen Stapel von Elementen umfasst, wobei die Elemente eine Anordnung von $M_x$ Wellenleitern $g_p$, eine Anordnung von $M_x \times M_y$ Beugungsgittern $r_{pq}$ und einer Anordnung von $M_y$ Elektroden $e_q$ umfasst, wobei $M_x$ und $M_y$ positive ganze Zahlen sind, deren Produkt $M_x \times M_y$ streng größer als 1 ist, wobei jedes Beugungsgitter $r_{pq}$ am Schnittpunkt eines der Wellenleiter $g_p$ und einer der Elektroden $e_p$ positioniert ist, so dass ein Emissionspunkt $EP_{pq}$ einer Lichtwelle gebildet wird, wobei die Anordnung von $M_x$ Wellenleitern $g_p$ in einer Konfiguration von Wellenleitern angeordnet ist und die Anordnung von $M_y$ Elektroden $e_q$ in einer Konfiguration von Elektroden angeordnet ist, wobei das Verfahren eine Phase der Konzipierung der Vorrichtung (10) und eine Phase der materiellen Herstellung der derart konzipierten Vorrichtung (10) umfasst, **dadurch gekennzeichnet, dass** die Konzeptionsphase einen Schritt umfasst, der darin besteht, die Wellenleiterkonfiguration oder die Elektrodenkonfiguration zu bestimmen (290), wobei die bestimmte Konfiguration eine Konfiguration von nicht geradlinigen Isolinen ist, die in der durch die Emissionsoberfläche S definierten Ebene (X, Y) definiert ist und eine aperiodische Verteilung von $M_x \times M_y$ der Emissionspunkte $EP_{pq}$ erzeugt.

2. Verfahren zur Herstellung einer Vorrichtung zum Projizieren eines Bildes (10) nach Anspruch 1, wobei der Schritt der Konfigurationsbestimmung (290) darin besteht, die Wellenleiterkonfiguration und die Elektrodenkonfiguration zu bestimmen, wobei die bestimmten Konfigurationen nicht geradlinige Isolinienkonfigurationen sind, die in der durch die Emissionsoberfläche S definierten Ebene (X, Y) definiert sind und eine aperiodische Verteilung von $M_x \times M_y$ Emissionspunkte $EP_{pq}$erzeugt.

3. Verfahren zur Herstellung einer Vorrichtung zum Projizieren eines Bildes (10) nach einem der Ansprüche 1 oder 2, wobei die Konzeptionsphase den Schritt umfasst, der darin besteht, dass eine anfängliche geometrische Kurve bestimmt (230) wird, die sich beiderseits der Emissionsoberfläche S entlang einer Erstreckungsachse parallel zur X-Achse und/oder zur Y-Achse des orthogonalen Koordinatensystems (X, Y, Z) erstreckt, wobei die anfängliche geometrische Kurve unter Beachtung mindestens eines Kurvenkonstruktionsmerkmals zufällig definiert ist.

4. Verfahren zur Herstellung einer Vorrichtung zum Projizieren eines Bildes (10) nach Anspruch 3, wobei die anfängliche geometrische Kurve aus einer Folge von Segmenten besteht.

5. Verfahren zur Herstellung einer Vorrichtung zum Projizieren eines Bildes (10) nach einem der Ansprüche 3 oder 4, wobei die Konzeptionsphase den Schritt umfasst, der darin besteht, dass eine Abstandsfunktion auf die geometrische Ausgangskurve angewendet wird (250), um die Konfiguration der Isolinien-Wellenleiter und/oder die Konfiguration der Isolinien-Elektroden zu erzeugen.

6. Verfahren zur Herstellung einer Vorrichtung zum Projizieren eines Bildes (10) nach Anspruch 5, wobei die Abstandsfunktion durch ein Verfahren vom Typ *Fast-Marching* bestimmt wird.

7. Verfahren zur Herstellung einer Vorrichtung zum Projizieren eines Bildes (10) nach einem der Ansprüche 3 bis 6, wobei die geometrische Ausgangskurve ausschließlich ordinäre Punkte, sogenannte "reguläre Punkte", umfasst, an denen die partiellen Ableitungen der Kurve nach X und Y nicht gleichzeitig null sind.

8. Verfahren zur Herstellung einer Vorrichtung zum Projizieren eines Bildes (10) nach einem der Ansprüche 3 bis 7, wobei die geometrische Ausgangskurve an jedem Punkt der Kurve in der Ebene (X, Y) einen Krümmungsradius umfasst, der größer oder gleich einem vordefinierten minimalen Krümmungsradius ist.

9. Verfahren zur Herstellung einer Vorrichtung zum Projizieren eines Bildes (10) nach Anspruch 8, wobei der minimale Krümmungsradius in Abhängigkeit von den physikalischen Eigenschaften der Wellenleiter $g_p$ und/oder der Elektroden $e_q$ und/oder den Herstellungsbeschränkungen der Wellenleiter oder der Elektroden definiert ist.

10. Verfahren zur Herstellung einer Vorrichtung zum Projizieren eines Bildes (10) nach einem der vorstehenden Ansprüche, wobei die Konzeptionsphase den Schritt umfasst, der darin besteht, dass die Emissionsoberfläche S in $L_x \times L_y$ in elementare Emissionszonen $Z^{ij}$ gemäß einem kontinuierlichen Maschennetz in der Ebene (X, Y) diskretisiert (120) wird, wobei jede elementare Emissionszone $Z^{ij}$ eine Teilmenge von $m_x^{ij} \cdot \times \cdot m_y^{ij}$ von Emissionspunkten $EP_{pq}^{ij}$ umfasst, wobei der Schritt darin besteht, dass die Konfiguration der Wellenleiter und/oder die Konfiguration der Elektroden, die auf jede elementare Emissionszone $Z^{ij}$ angewendet wird, bestimmt (290) wird, so dass eine Unterkonfiguration von nicht geradlinigen Isolinien-Wellenleitern und/oder eine Unterkonfiguration von nicht geradlinigen Isolinien-Elektroden gebildet wird.

11. Verfahren zur Herstellung einer Vorrichtung zum Projizieren eines Bildes (10) nach Anspruch 10, wobei die Unterkonfiguration der nicht geradlinigen Isolinien-Wellenleiter und/oder die Unterkonfiguration der nicht geradlinigen Isolinien-Elektroden durch Anwenden eines Verfahrens vom Typ *Fast-Marching* auf eine geometrische Ausgangskurve erzeugt wird, die sich in der Ebene der Emissionsoberfläche S beiderseits von der elementaren Emissionszone $Z^{ij}$ entlang einer zur X-Achse und/oder zur Y-Achse parallelen Erstreckungsachse erstreckt.

12. Vorrichtung zum Projizieren eines Bildes (10) auf ein Auge, wobei die Vorrichtung anhand des in einem der vorstehenden Ansprüche 1 bis 8 definierten Verfahrens hergestellt wird, wobei die Vorrichtung in einem orthogonalen Koordinatensystem (X, Y, Z) definiert ist und eine Emissionsoberfläche S umfasst, die sich im Allgemeinen in der Ebene (X, Y) des orthogonalen Koordinatensystems (X, Y, Z) erstreckt, wobei die Emissionsoberfläche S einen Stapel von Elementen umfasst, wobei die Elemente eine Anordnung von $M_x$ Wellenleitern $g_p$, eine Anordnung von $M_x \times M_y$ Beugungsgittern $r_{pq}$ und eine Anordnung von $M_y$ Elektroden $e_q$ umfasst, wobei die Zahlen $M_x$ und $M_y$ ganze Zahlen streng größer als 1 sind, wobei jedes Beugungsgitter $r_{pq}$ an dem Schnittpunkt von einem der Wellenleiter $g_p$ und einer der Elektroden $e_p$ positioniert ist, so dass ein Emissionspunkt $EP_{pq}$ einer Lichtwelle gebildet wird, wobei die Anordnung von $M_x$ Wellenleitern $g_p$ in einer Konfiguration von Wellenleitern angeordnet ist, und die Anordnung von $M_y$ Elektroden $e_q$ in einer Konfiguration von Elektroden angeordnet ist, wobei die Konfiguration von Wellenleitern oder die Konfiguration von Elektroden eine Konfiguration von nicht geradlinigen Isolinien ist, die in der durch die Emissionsoberfläche S definierten Ebene (X, Y) definiert ist und eine aperiodische Verteilung der ($M_x \times M_y$) Emissionspunkte $EP_{pq}$ erzeugt.

13. Tragbares optisches transparentes Datenanzeigesystem, umfassend eine Vorrichtung zum Projizieren eines Bildes (10) nach dem vorstehenden Anspruch, wobei das System ein Brillensystem oder ein Helm mit erweiterter Realität ist.

**Claims**

1. Method for manufacturing a device (10) for projecting an image on an eye, the device being defined in an orthogonal system (X,Y,Z) and comprising an emission surface S extending generally into the plane (X,Y) of said orthogonal system (X,Y,Z), the emission surface S comprising a stack of elements, said elements comprising a set of $M_x$ waveguides $g_p$, a set of $M_x \times M_y$ diffraction gratings $r_{pq}$ and a set of $M_y$ electrodes $e_q$, $M_x$ and $M_y$ being positive integers, the product $M_x \times M_y$ of which is strictly greater than 1, each diffraction grating $r_{pq}$ being positioned at the intersection of one of said waveguides $g_p$ and one of said electrodes $e_p$ so as to form an emission point $EP_{pq}$ of a light wave, said set of $M_x$ waveguides $g_p$ being arranged along a waveguide configuration, and said set of $M_y$ electrodes $e_q$ being arranged along an electrode configuration,
the method comprising a phase of designing said device (10) and a phase of materially manufacturing said device (10) thus designed, **characterised in that** said design phase comprises a step (290) consisting of determining said waveguide configuration or said electrode configuration, said determined configuration being a non-rectilinear isoline configuration defined in the plane (X,Y) defined by the emission surface S and generating an aperiodic distribution of $M_x \times M_y$ emission points $EP_{pq}$.

2. Method for manufacturing a device (10) for projecting an image according to claim 1, wherein the configuration determination step (290) consists of determining said waveguide configuration and said electrode configuration, said determined configurations being non-rectilinear isoline configurations defined in the plane (X,Y) defined by the emission surface S and generating an periodic distribution of $M_x \times M_y$ emission points $EP_{pq}$.

3. Method for manufacturing a device (10) for projecting an image according to any one of claims 1 or 2, wherein said design phase comprises the step (230) consisting of determining an initial geometric curve extending on either side of said emission surface S along an extension axis parallel to the axis X and/or to the axis Y of said orthogonal system (X,Y,Z), said initial geometric curve being defined randomly, while respecting at least one curve construction feature.

4. Method for manufacturing a device (10) for projecting an image according to claim 3, wherein said initial geometric curve consists of a succession of segments.

5. Method for manufacturing a device (10) for projecting an image according to any one of claims 3 or 4, wherein said design phase comprises the step (250) consisting of applying a distance function to said initial geometric curve to generate the isoline waveguide configuration and/or the isoline electrode configuration.

6. Method for manufacturing a device (10) for projecting an image according to claim 5, wherein said distance function is determined by a *Fast-Marching*-type method.

7. Method for manufacturing a device (10) for projecting an image according to any one of claims 3 to 6, wherein said initial geometric curve only comprises ordinary points called 'regular points' for which the partial differentials of said curve along X and Y are not simultaneously zero.

8. Method for manufacturing a device (10) for projecting an image according to any one of claims 3 to 7, wherein said initial geometric curve comprises, at any point of said curve, in the plane (X,Y), a bend radius greater than or equal to a predefined minimum bend radius.

9. Method for manufacturing a device (10) for projecting an image according to claim 8, wherein said minimum bend radius is defined according to the physical properties of the waveguides $g_p$ and/or of the electrodes $e_q$, and/or of the manufacturing constraints of said waveguides or of said electrodes.

10. Method for manufacturing a device (10) for projecting an image according to any one of the preceding claims, wherein said design phase comprises the step (120) consisting of discretising (120) said emission surface S in $L_x \times L_y$ of elementary emission zones $Z^{ij}$ along a continuous grid in the plane (X,Y), each elementary emission zone $Z^{ij}$ comprising a subassembly of $m_x^{ij} \cdot \times \cdot m_y^{ij}$ emission points $EP_{pq}^{ij}$, said step (290) consisting of determining said waveguide configuration and/or said electrode configuration being applied to each elementary emission zone $Z^{ij}$ so as to form a non-rectilinear isoline waveguide subconfiguration and/or a non-rectilinear isoline electrode subconfiguration.

11. Method for manufacturing a device (10) for projecting an image according to claim 10, wherein said non-rectilinear isoline waveguide subconfiguration and/or said non-rectilinear isoline electrode subconfiguration are generated by applying a *Fast-Marching*-type method to an initial geometric curve extending into the plane of the emission surface S on either side of the elementary emission zone $Z^{ij}$ along an extension axis parallel to the axis X and/or to the axis Y.

12. Device (10) for projecting an image on an eye, the device being manufactured from the method defined according to any one of preceding claims 1 to 8, said device being defined in an orthogonal system (X,Y,Z) and comprising an emission surface S extending generally into the plane (X,Y) of said orthogonal system (X,Y,Z), the emission surface S comprising a stack of elements, said elements comprising a set of $M_x$ waveguides $g_p$, a set of $M_x \times M_y$ diffraction gratings $r_{pq}$ and a set of $M_y$ electrodes $e_q$, the numbers $M_x$ and $M_y$ being integers strictly greater than 1, each diffraction grating $r_{pq}$ being positioned at the intersection of one of said waveguides $g_p$ and at one of said electrodes $e_p$ so as to form an emission point $EP_{pq}$ of a light wave, said set of $M_x$ waveguides $g_p$ being arranged along a waveguide configuration, and said set of $M_y$ electrodes $e_q$ is arranged along an electrode configuration, said waveguide configuration or said electrode configuration being a non-rectilinear isoline configuration defined in the plane (X,Y) defined by the emission surface S and generating an aperiodic distribution of ($M_x \times M_y$) emission points $EP_{pq}$.

13. Transparent portable optical system for displaying data comprising a device (10) for projecting an image according to the preceding claim, wherein said system is an augmented reality glasses or headset system.

**Fig. 1a**

**Fig. 1b**

**Fig. 2**

**Fig. 3**

**Fig. 4**

**Fig. 5**

**Fig. 6**

**Fig. 7a**

**Fig. 7b**

**Fig. 8a**

**Fig. 8b**

**Fig. 9**

Discrétisation de la surface d'émission S
en zones d'émission élémentaires $Z^{ij}$

/ 120

Répartition du sous-ensemble de points d'émission $EP_{pq}^{ij}$
en distributions de points d'émission $EPD_{uv}^{ij}$

/ 140

Attribution des distributions de points d'émission $EPD_{uv}^{ij}$
aux pixels de l'image à projeter

/ 160

Détermination pour chaque distribution de points d'émission
$EPD_{uv}^{ij}$ de la direction du vecteur d'onde $\vec{k}_{uv}^{ij}$

/ 180

**Fig. 10**

Détermination de la résolution $(N_x \times N_y)$
de l'image à projeter

/ 102

Détermination de la taille $(\theta_x, \theta_y)$
du champ de vision

/ 104

Détermination de la distance $Z_{er}$
du dégagement oculaire

/ 106

Calcul de la taille $(D_{emx}, D_{emy})$
de la surface d'émission S

/ 108

Détermination de la taille $(d_{emx}^{ij}, d_{emy}^{ij})$
des zones d'émission élémentaires $Z^{ij}$

/ 110

Calcul des nombres $(L_x \times L_y)$
de zones d'émission élémentaires $Z^{ij}$

/ 112

Détermination des largeurs $e_x$ et $g_y$ et des configurations des
guides d'ondes $g_p$ et des électrodes $e_q$

/ 114

Calcul des nombres $(m_x^{ij} \times m_y^{ij})$ de guides d'ondes $g_p$ et
d'électrodes $e_q$ par zones d'émission élémentaires $Z^{ij}$

/ 116

Calcul du nombre $n_{em/EPD}$
de points d'émission par distribution de points d'émission

/ 118

**Fig. 11a**

**Pour la distribution de points d'émission** $EPD_{uv}^{ij}$

| |
|---|
| Tirages aléatoires et/ou pseudo-aléatoires<br>du nombre de guides d'ondes $g_p$ et du nombre d'électrodes $e_q$<br>pour obtenir le nombre $n_{em/EPD}$ de points d'émission |

/ 122

| |
|---|
| Tirages aléatoires et/ou pseudo-aléatoires<br>du nombre de guides d'ondes $g_p$ et du nombre d'électrodes $e_q$<br>parmi les $\left(m_x^{ij} \times m_y^{ij}\right)$ de guides d'ondes $g_p$ et d'électrodes $e_q$<br>de la zone d'émission élémentaires $Z^{ij}$ |

/ 124

**Fig. 11b**

Fig. 12

**Fig. 13**

EP 4 443 215 B1

Initialisation d'une matrice de calcul
de $nb_{cal_x} \times nb_{cal_y}$ points associés à la surface d'émission S

210

Détermination et implémentation dans la matrice de calcul
d'une courbe géométrique initiale f0(X,Y)

230

Calculer une cartographie de distance
à partir de la méthode de type *Fast-Marching* appliquée à la
courbe géométrique initiale f0(X,Y) dans la matrice de calcul

250

Détermination de la distance minimum entre deux lignes $d_{min}$
et des multiples $c$

270

Détermination de l'ensemble des isolignes à partir de la
cartographie de distance et des valeurs de distance $c \times d_{min}$

290

**Fig. 14**

40

Fig. 15

**PSF**

Translation de segments

**Fig. 16a**

**PSF**

Isolignes

**Fig. 16b**

Translation de segments          Isolignes

**Fig. 17a**

Isolignes

Translation de segments

**Fig. 17b**

**Fig. 18**

## RÉFÉRENCES CITÉES DANS LA DESCRIPTION

**Documents brevets cités dans la description**

- FR 3122929 A1

- FR 3022642 A1

**Littérature non-brevet citée dans la description**

- Level Set Methods and Fast Marching Methods Evolving Interfaces in Computational Geometry,. **JAMES SETHIAN**. Fluid Mechanics, Computer Vision and Materials Science. Cambridge University Press, 1999